(19) Europäisches Patentamt / European Patent Office / Office européen des brevets

(11) **EP 3 465 263 B1**

(12) **EUROPÄISCHE PATENTSCHRIFT**

(45) Veröffentlichungstag und Bekanntmachung des Hinweises auf die Patenterteilung:
**01.12.2021 Patentblatt 2021/48**

(21) Anmeldenummer: **17730687.5**

(22) Anmeldetag: **26.05.2017**

(51) Int Cl.:
***G01S 13/90*** (2006.01)

(86) Internationale Anmeldenummer:
**PCT/EP2017/062782**

(87) Internationale Veröffentlichungsnummer:
**WO 2017/207440 (07.12.2017 Gazette 2017/49)**

(54) **VERFAHREN ZUR ERSTELLUNG EINES ERDBEOBACHTUNGSBILDES EINER REGION MITTELS EINES RADARS MIT SYNTHETISCHER APERTUR**

METHOD FOR PRODUCING AN EARTH OBSERVATION IMAGE OF A REGION BY MEANS OF A RADAR HAVING SYNTHETIC APERTURE

PROCÉDÉ DE PRODUCTION D'UNE IMAGE D'OBSERVATION TERRESTRE D'UNE RÉGION AU MOYEN D'UN RADAR À SYNTHÈSE D'OUVERTURE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.06.2016 DE 102016209803**
**15.07.2016 DE 102016212996**

(43) Veröffentlichungstag der Anmeldung:
**10.04.2019 Patentblatt 2019/15**

(73) Patentinhaber: **Deutsches Zentrum für Luft- und Raumfahrt e.V.**
**51147 Köln (DE)**

(72) Erfinder:
- **MITTERMAYER, Josef**
  **81371 München (DE)**
- **LÓPEZ-DEKKER, Paco**
  **81245 München (DE)**
- **PAU, Prats-Iraola**
  **82205 Gilching (DE)**
- **KRAUS, Thomas**
  **89364 Rettenbach (DE)**
- **KRIEGER, Gerhard**
  **82131 Gauting (DE)**
- **MOREIRA, Alberto**
  **82140 Olching (DE)**

(74) Vertreter: **dompatent von Kreisler Selting Werner - Partnerschaft von Patent- und Rechtsanwälten mbB**
**Deichmannhaus am Dom**
**Bahnhofsvorplatz 1**
**50667 Köln (DE)**

(56) Entgegenhaltungen:
- **JOSEF MITTERMAYER ET AL: "Bidirectional SAR Imaging Mode", IEEE TRANSACTIONS ON GEOSCIENCE AND REMOTE SENSING, IEEE SERVICE CENTER, PISCATAWAY, NJ, US, Bd. 51, Nr. 1, 1. Januar 2013 (2013-01-01) , Seiten 601-614, XP011481478, ISSN: 0196-2892, DOI: 10.1109/TGRS.2012.2202669 in der Anmeldung erwähnt**
- **MA XILE ET AL: "Spectrum reconstruction and the performance analysis for multichannel bidirectional SAR", SCIENCE CHINA INFORMATION SCIENCES, SCIENCE CHINA PRESS, HEIDELBERG, Bd. 58, Nr. 8, 22. Januar 2015 (2015-01-22), Seiten 1-13, XP035516253, ISSN: 1674-733X, DOI: 10.1007/S11432-014-5265-7 [gefunden am 2015-01-22]**
- **RICCARDO LANARI ET AL: "Spotlight SAR Data Focusing Based on a Two-Step Processing Approach", IEEE TRANSACTIONS ON GEOSCIENCE AND REMOTE SENSING, IEEE SERVICE CENTER, PISCATAWAY, NJ, US, Bd. 39, Nr. 9, 1. September 2001 (2001-09-01), XP011021822, ISSN: 0196-2892**

- CHEN QIAN ET AL: "Investigation of Multichannel Sliding Spotlight SAR for Ultrahigh-Resolution and Wide-Swath Imaging", IEEE GEOSCIENCE AND REMOTE SENSING LETTERS, IEEE SERVICE CENTER, NEW YORK, NY, US, Bd. 10, Nr. 6, 1. November 2013 (2013-11-01), Seiten 1339-1343, XP011529517, ISSN: 1545-598X, DOI: 10.1109/LGRS.2013.2240650 [gefunden am 2013-10-10]
- YAN LIU ET AL: "Echo Model Analyses and Imaging Algorithm for High-Resolution SAR on High-Speed Platform", IEEE TRANSACTIONS ON GEOSCIENCE AND REMOTE SENSING, Bd. 50, Nr. 3, 1. März 2012 (2012-03-01), Seiten 933-950, XP055131219, ISSN: 0196-2892, DOI: 10.1109/TGRS.2011.2162243

- MCHUGH R ET AL: "Azimuth ambiguities in broadside and squint mode synthetic aperture sonar", IEE PROCEEDINGS: RADAR, SONAR & NAVIGAT, INSTITUTION OF ELECTRICAL ENGINEERS, GB, Bd. 146, Nr. 2, 6. April 1999 (1999-04-06) , Seiten 113-119, XP006013666, ISSN: 1350-2395, DOI: 10.1049/IP-RSN:19990260

**Beschreibung**

Die Erfindung betrifft ein Verfahren zur Erstellung eines Erdbeobachtungsbildes einer Region mittels eines Radars mit synthetischer Apertur (SAR) und einer phasengesteuerten, aus Einzelantennen zusammengesetzten Gruppenantenne mit einem durch einen Steuerwinkel erzielbaren azimutalen Schwenkwinkelbereich, wobei jede Einzelantenne einen die Einzelantennenverstärkung in Abhängigkeit vom Raumwinkel beschreibenden Elementfaktor und die Gruppenantenne einen Arrayfaktor aufweist, der die sich aus der Anordnung und Anzahl der Einzelantennen ergebende Gruppenantennenverstärkung in Abhängigkeit vom Raumwinkel beschreibt, wobei die Gruppenantennenverstärkung mehrere Hauptmaxima aufweist, die im Wesentlichen gleich groß sind und die jedoch im Hinblick auf die Gesamtverstärkung, die sich aus dem Elementfaktor und der Gruppenantennenverstärkung ergibt, zu größer werdenden Steuerwinkeln hin abgeschwächt sind. Insbesondere betrifft die Erfindung ein Verfahren zur Auflösungsverbesserung durch Ausdehnung des nutzbaren Schwenkwinkelbereichs einer phasengesteuerten Gruppenantenne für Radar mit synthetischer Apertur (SAR) (nachfolgend auch Wrapped Staring Spotlight genannt) und zur SAR-Bildqualitätsverbesserung bei Anteilen der sythetischen Apertur mit schlechtem SNR (nachfolgend auch mit LNPC bzw. Omega-Weighting bezeichnet).

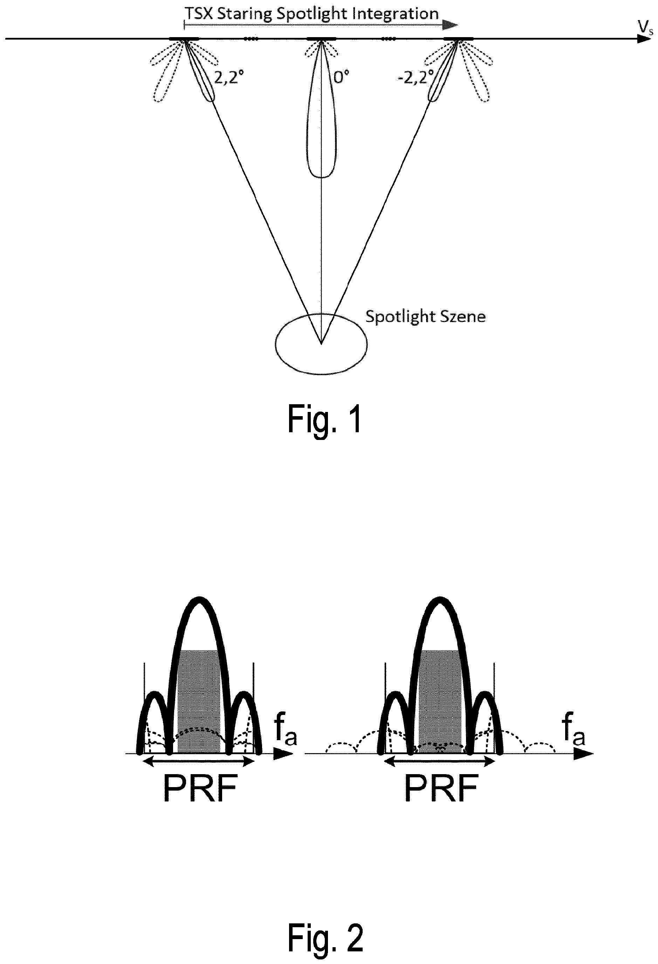

Staring Spotlight [1] ist der SAR-Abbildungsmodus (engl.: Synthetic Aperture Radar SAR) mit der längsten Beleuchtungsdauer eines Ziels und somit auch mit der besten Auflösung. Die Antenne wird dabei während des Vorbeiflugs des Radars stetig auf das Zentrum der abzubildenden Szene gerichtet (siehe Fig. 1). Die Beleuchtungsdauer und somit die azimutale Auflösung ist dabei durch den maximalen azimutalen Schwenkwinkelbereich der Antenne bestimmt.

Sehr häufig ist die Antenne als phasengesteuerte Gruppenantenne realisiert, welche schnelle Änderungen der Antennenblickrichtung ohne Anforderungen an die Lage des Trägers oder eine Beeinflussung derselben erlaubt. Die Ausrichtung der Blickrichtung erfolgt dabei elektronisch durch Anregungskoeffizienten für die jeweiligen Einzelantennen. Für jeden Steuerwinkel ist in der Regel ein Satz von Anregungskoeffizienten an Bord des Trägers gespeichert. Dadurch sind die einstellbaren Steuerwinkel in ihrer Anzahl oder Quantisierung begrenzt. In der Regel ist der Abstand der durch Anregungskoeffizienten ansprechbaren Einzelantennen größer als die halbe Wellenlänge, was zum Auftreten von Gitterkeulen (engl.: Grating Lobes) führt.

Ein dem Stand der Technik entsprechendes SAR-System mit Staring-Spotlight-Abbildungsmodus und phasengesteuerter Gruppenantenne ist TerraSAR-X (TSX) [1]. Bei diesem beispielhaften System decken die on-board tabellierten Anregungskoeffizienten einen Bereich azimutaler Steuerwinkel zwischen -2,2° und +2,2° ab. Dieser Winkelbereich von 4,4° entspricht dem Winkelabstand $\Delta\theta_{GL}$ zwischen den Hauptmaxima des Azimut-Antennendiagramms. Hauptmaxima sind die Gitterkeulen und die Hauptkeule. Es ist möglich, den Schwenkwinkelbereich durch eine andere Verteilung der Steuerwinkel auszudehnen, was aber zu einer Vergrößerung der Quantisierung und somit zu Qualitätsverlusten führt.

Fig. 1 zeigt den schrägen Vorbeiflug eines Trägers an der aufzunehmenden Spotlight-Szene von einem Beobachtungspunkt aus, welcher der Flugbahn des Trägers so gegenüber liegt, dass sich die Spotlight-Szene am Boden dazwischen befindet. Der Träger überfliegt die aufzunehmende Szene seitlich mit der Geschwindigkeit $V_s$. Dabei wird die azimutale Blickrichtung der Antenne so geführt, dass sie ständig auf das Szenenzentrum gerichtet ist, also dorthin "starrt" (engl.: to stare). Der in Fig. 1 dargestellte Schwenkwinkelbereich entspricht dem $\Delta\theta_{GL}$ des TSX-Systems. Die in durchgezogenen Linien dargestellten Antennenkeulen zeigen in die durch die Anregungskoeffizienten eingestellten Steuerwinkel.

Eine Technik, die im weiter unten beschriebenen Wrapped-Starring-Spotlight-Modus unterstützend zum Einsatz kommt, ist die des Diverging PRF-Setting [1],[2]. In SAR-Systemen erfolgt eine Abtastung des im Prinzip nicht bandbegrenzten Signals in Azimut mit der Pulswiederholfrequenz (PRF). Dabei werden Signale aus Richtungen, welche nicht Azimutfrequenzen innerhalb des PRF-Bandes entsprechen, durch Rückfaltung ebenfalls in das PRF-Band gespiegelt. Durch gezielte Auswahl der verwendeten PRF kann nun die Positionierung eines unerwünschten gesteuerten oder rückgefalteten Hauptmaximums relativ zu einem gewünschten gesteuerten oder rückgefalteten Hauptmaximums eingestellt werden. Diverging PRF-Setting bedeutet nun, die Position der gewünschten und ungewünschten Hauptmaxima so weit als möglich voneinander separiert einzustellen. Dann kann mit einer Bandpassfilterung möglichst viel des unerwünschten Hauptmaximums entfernt werden. Fig. 2 zeigt in dicker, durchgezogener Linie ein gewünschtes Hauptmaximum zentriert in der Mitte des PRF-Bandes, links mit zwei unerwünschten Hauptmaxima in dünner gestrichelter Linie in Converging PRF-Setting, also mit einer Zentrierung dieser ebenfalls in der Mitte des PRF-Bandes. In der rechten Darstellung sind die unerwünschten Hauptmaxima in Diverging PRF-Setting.

Die konventionelle SAR-Prozessierung in der azimutalen Dimension führt unter anderem eine Korrektur des Azimut-Antennen-Diagramms im Azimut-Spektrum durch und danach eine Gewichtung eines jeden Looks in Azimut zur Kontrolle bzw. Unterdrückung der Nebenzipfel der Impulsantwort. Die Nebenzipfelunterdrückung kann auch im Azimut-Spektrum verortet werden. Für die Verarbeitung von Daten des beispielhaften TSX-Systems wird im Folgenden ein "General Cosine Window" [1] mit einem $\alpha$-Parameter von 0,6 angenommen. Dies reduziert die geometrische Auflösung im Vergleich zur Prozessierung ohne Nebenzipfelunterdrückung um den Faktor 1,3. Die bisher für das beispielhafte TSX-System maximale geometrische Azimutauflösung im Staring Spotlight Abbildungsmodus, die sich aus dem Azimut-Schwenkwinkelbereich von 4,4° ergibt, beträgt 0,165 m ohne spektrale Gewichtung zur Nebenzipfelunterdrückung und 0,225 m mit Nebenzipfelunterdrückung [1]. Das größte Nebenzipfelverhältnis bezogen auf das Maximum der Impulsantwort (engl.: Peak Sidelobe Ratio - PSLR) ist -13,2 dB ohne Nebenzipfelunterdrückung und -31,6 dB mit Unterdrückung.

Es gibt zwei prinzipielle Möglichkeiten die zur Verfügung stehende azimutale Bandbreite bildhaft darzustellen: in maximaler geometrischer Auflösung oder durch Aufteilen der Bandbreite in mehrere Sichten (engl. "Looks") und inkohärente Addition dieser, was eine Darstellung mit reduziertem Speckle und verschlechterter geometrischer Auflösung ergibt. Speckle ist eine Fluktuation der Helligkeit, die allen SAR-Bildern inhärent ist und welche die Detektion von Zielen erschwert. Looks werden in SAR-Bildern häufig überlappend generiert und ein verbreitetes Maß zur Quantifizierung der Reduktion von Speckle ist die "Äquivalente Anzahl von Looks" (engl.: "Equivalent Number of Looks - ENL").

Ein weiterer wichtiger Qualitätsparameter von SAR-Bildern ist der Anteil von Rauschen im Signal, welcher durch das Signal-zu-Rausch-Verhältnis (engl.: Signal to Noise Ratio - SNR) beschrieben werden kann. Der dominante Anteil des Rauschens ist in der Regel das thermische Rauschen am Radarempfänger. Ein hoher Rauschanteil im SAR-Signal erscheint im SAR-Bild wie ein Grauschleier, der sich über das Bild legt. Ein hoher Rauschanteil reduziert ebenfalls die Detektierbarkeit von Zielen.

Sowohl Speckle als auch thermisches Rauschen fluktuieren den gemessenen Radar-Rückstreuquerschnitt. Für Flächenziele kann man ENL und SNR in einen Qualitätsparameter zusammenfassen und die Detektierbarkeit im SAR-Bild durch die "Radiometrische Auflösung (engl.: radiometric resolution RR)" beschreiben als

$$\mathrm{RR} = 1 + \frac{1 + 1/\mathrm{SNR}}{\sqrt{\mathrm{ENL}}} \ . \qquad (1)$$

Der Kontrast ist eine hilfreiche Messgröße zum Vergleich von unterschiedlich dargestellten SAR-Bildern. Er liefert Rückschlüsse auf eine Veränderung des Rauschanteils und beschreibt die Detektierbarkeit von Szenen mit heterogenem Rückstreuquerschnitt (engl.: "Backscatter"), wie er zum Beispiel in urbanen Gebieten auftritt. Es gibt für SAR keine einheitliche Definition des Kontrasts. Im Folgenden wird nachstehende Definition des "Root Mean Square Contrast" $C_{rms}$ verwendet, die ähnlich für optische Bilder definiert ist:

$$C_{rms} = \sqrt{\frac{1}{N_p} \cdot \sum_{p=1}^{N_p} \left(g_p - \overline{g}\right)^2} \quad ; \overline{g} = \frac{1}{N_p} \cdot \sum_{p=1}^{N_p} g_p \quad ; g_p \in \left[0,..,255\right] \ , \qquad (2)$$

wobei $N_p$ die Anzahl von Bildpixeln mit Grauwerten von 0 bis 255 ist und $g_p$ der Grauwert eines Pixels. Je kleiner $C_{rms}$ ist, umso ähnlicher ist das Bild einem einzigen, idealen, das ganze Bild ausfüllende Flächenziel ohne Speckle und ohne Rauschen. Je größer $C_{rms}$ für eine Szene mit gemischten Zielen, also Flächenzielen, urbane Gebieten und Punktzielen ist, umso weniger Rauschanteil ist vorhanden. Der maximale Kontrast ergibt sich, wenn die Hälfte der Pixel maximale und die andere Hälfte minimale Graustufe aufzeigen. Der maximale Kontrast entspricht der Hälfte der höchsten Graustufe, also 127,5 in Gleichung (1). Die Darstellung der zurückgestreuten Radarleistung erfolgt wegen des günstigeren Dynamikbereiches oft in der Wurzel der Intensität, also in Amplitude. Im Folgenden wird der Grauwert Null der Amplitude Null zugeordnet und der Grauwert 255 der Wurzel des 95. Perzentils der Intensität.

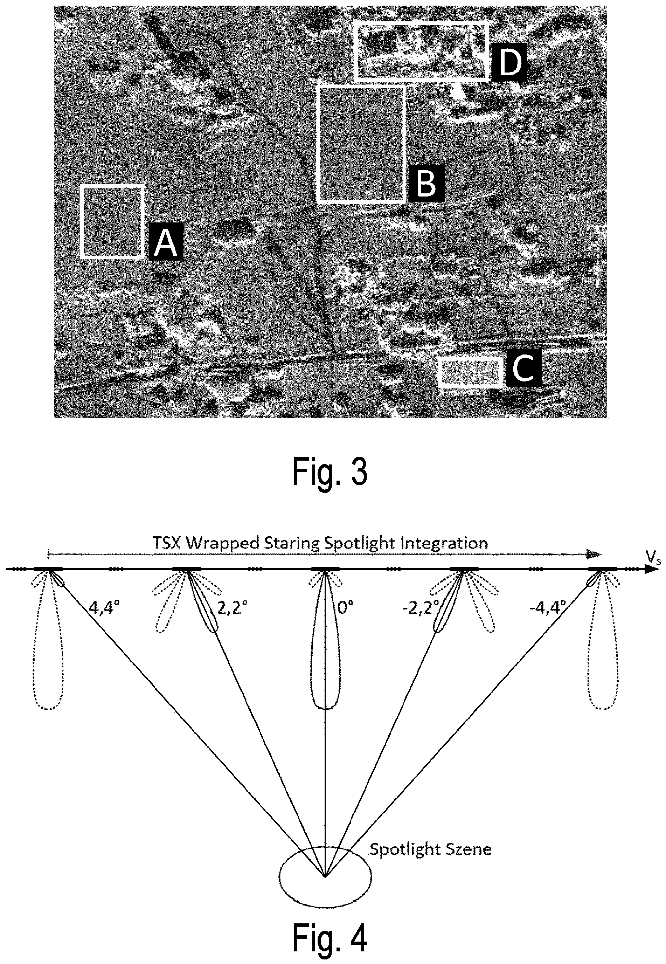

Die Darstellung der Amplitude in Fig. 3 vom Wert 0 bis zur Wurzel des 95. Perzentils aller Intensitätswerte entspricht linear den Grauwerten von 0 bis 255. In Tabelle 1 ist der Wert der Wurzel mit 11,76 angegeben. Der gemessene Kontrast des Ganzen in Fig. 3 dargestellten Bereichs ist 56,5 und für den Bereich D der urbanen Fläche 75,2. Ein Flächenziel sollte idealerweise einen möglichst geringen Kontrast zeigen, also geringes Speckle und thermisches Rauschen. Für die drei Flächenziele A, B und C ist der Kontrast in Tabelle 1 gegeben, ebenso wie die gemessenen ENL-Werte und das mittlere SNR. Aus den letzten beiden ergibt sich laut Gleichung (1) die radiometrische Auflösung zu ungefähr 2,3 für die drei Flächenziele.

| Grauwerte | | 0 entspricht der Amplitude | 0 |
|---|---|---|---|
| | | 255 entspricht der Amplitude | 11,76 |
| Kontrast C$_{rms}$ | | ganzes Bild 3 | 56,5 |
| | | Bebauung (blau) | 75,2 |
| Flächenziele | C$_{rms}$ | Zielgebiet B | 40,3 |
| | | Zielgebiet A | 40,3 |
| | | Zielgebiet C | 53,4 |
| | ENL | Zielgebiet B | 2,19 |
| | | Zielgebiet A | 2,25 |
| | | Zielgebiet C | 1,96 |
| | mittleres SNR [dB] | Zielgebiet B | 12,6 |
| | | Zielgebiet A | 12,7 |
| | | Zielgebiet C | 16,5 |
| | radio-metr. Auflösung [dB] | Zielgebiet B | 2,34 |
| | | Zielgebiet A | 2,25 |
| | | Zielgebiet C | 2,38 |

Tabelle 1: Bildqualitätsparameter für den Ausschnitt aus einem Staring Spotlight Bild des TerraSAR-X Systems.

a) In Staring Spotlight SAR ist entweder der azimutale Steuerwinkelbereich oder die Quantisierung der Steuerwinkel durch den verfügbaren On-board-Speicher begrenzt. Durch den bei Beibehaltung der Quantisierung begrenzten Steuerwinkelbereich ist die maximal mögliche geometrische Auflösung begrenzt. Bei Beibehaltung einer geometrischen Auflösung ist die radiometrische Auflösung begrenzt.

b) Wird bei SAR-Akquisitionen der Winkelbereich so weit ausgedehnt, dass auch Winkel in die synthetische Apertur eingehen, unter denen der Antennengewinn schlecht ist, dann erhöht sich das thermische Rauschen bei konventioneller SAR-Prozessierung stark und das SNR im SAR-Bild ist schlecht. Daher werden diese Winkelbereiche nicht verarbeitet und deren Informationspotential bleibt ungenutzt.

Aufgabe der Erfindung ist die Verbesserung der Auflösung und der Bildqualität bei SAR-Systemen.
Zur Lösung dieser Aufgabe wird mit der Erfindung ein Verfahren vorgeschlagen zur Erstellung eines Erdbeobachtungsbildes einer Region mittels eines Radars mit synthetischer Apertur (SAR) und einer phasengesteuerten, aus Einzelantennen zusammengesetzten Gruppenantenne mit einem durch einen Steuerwinkel erzielbaren azimutalen Schwenkwinkelbereich, wobei jede Einzelantenne einen die Einzelantennenverstärkung in Abhängigkeit vom Raumwinkel beschreibenden Elementfaktor und die Gruppenantenne einen Arrayfaktor aufweist, der die sich aus der Anordnung und Anzahl der Einzelantennen ergebende Gruppenantennenverstärkung in Abhängigkeit vom Raumwinkel beschreibt, wobei die Gruppenantennenverstärkung mehrere Hauptmaxima aufweist, die im Wesentlichen gleich groß sind und die jedoch im Hinblick auf die Gesamtverstärkung, die sich aus dem Elementfaktor und der Gruppenantennenverstärkung ergibt, zu größer werdenden Steuerwinkeln hin abgeschwächt sind, wobei bei dem Verfahren

- der nutzbare azimutale Schwenkwinkelbereich bei der Erfassung einer Region erweitert wird durch mehrmaliges Einstellen des gleichen Steuerwinkels innerhalb des eindeutigen, durch die geometrische Anordnung der Einzelantennen gegebenen Steuerwinkelbereichs, und durch Herausfiltern desjenigen mehrdeutigen Hauptmaximums, das in die jeweils gewünschte Steuerrichtung zeigt, wodurch die geometrische und/oder radiometrische Auflösung des SAR verbessert wird, wobei die Pulswiederholfrequenz, mit der die Radarpulse gesendet werden, so gewählt wird, dass die jeweils gewünschten und die ungewünschten Hauptmaxima zur Reduzierung der ungewünschten Hauptmaxima separiert sind und somit ein Herausfiltern dieser Hauptmaxima möglich ist, und

- mindestens eine Aufnahme der Region zur Erstellung eines Erdbeobachtungsbilds verarbeitet wird.

Gemäß einer Weiterbildung der Erfindung erfolgt neben der Erweiterung des nutzbaren azimutalen Schwenkwinkelbereichs die Verarbeitung des Erdbeobachtungsbildes anhand einer Multi-Look-Verarbeitung, d.h. anhand der Verarbeitung einer Gesamtaufnahme einer Region erstellt wird, die zusammengesetzt ist aus mehreren Teilaufnahmen (sogenannte Looks) der Region durch Beleuchten über jeweils unterschiedliche Blickwinkelbereiche hinweg, wobei die Teilaufnahmen jeweils aus der Gesamtaufnahme herausgefiltert werden, wobei

- Anteile der synthetischen Apertur, die bei bestimmten Blickwinkeln ein Signal-zu-Rausch-Verhältnis aufweisen, das kleiner ist als ein vorgebbarer Grenzwert und damit "schlecht" ist, weshalb diese Anteile der synthetischen Apertur bei bisherigen Verfahren nicht genutzt wurden, nutzbar gemacht werden durch eine Signal-zu-Rausch-abhängige Aufsummierung der einzelnen Looks, wobei die Aufsummierung entweder

  - ortsunabhängig direkt aus dem Azimut-Antennendiagramm abgeleitet wird durch eine normalisierte Korrektur des Antennendiagramms in den einzelnen Looks (LNPC), wobei zunächst das Antennendiagramm korrigiert und danach in jedem Look eine Normierung so durchgeführt wird, dass bei einem bestimmten Azimutwinkel oder, falls die Operation im Spektrum durchgeführt wird, bei einer bestimmten, für jeden Look spezifischen Azimutfrequenz das Produkt aus inversem Antennendiagramm und Normierung in jedem Look einen Wert von eins ergibt,
  oder
  - ortabhängig durch eine an jeder Pixelposition unterschiedliche Signal-zu-Rausch-abhängige Gewichtung der Looks (Ω-Weighting) durchgeführt wird, wobei die Gewichtungsfunktion nach gewünschten Optimierungskriterien erstellt wird.

Weitere mögliche Varianten der Erfindung betreffen bei ortsabhängiger Gewichtung der Looks, indem es sich bei den Optimierungskriterium für die Erstellung der Gewichtungsfunktion um

- eine möglichst gute radiometrische Auflösung und/oder
- eine möglichst gutes Signal-zu-Rausch-Verhältnis im Multi-Look-Bild und/oder
- eine möglichst hohe Anzahl Equivalent Number of Looks handelt/handeln kann.

Ein weiterer Aspekt der Erfindung ist darin zu sehen, dass die Aufnahme im Spotlight-Modus und damit durch Verlängerung der Beleuchtung der aufzunehmenden Region infolge der Erweiterung des azimutalen Schwenkwinkelbereichs, oder im TOPSAR-Modus durch Ausdehnung des azimutalen Schwenkwinkelbereichs, oder im Bi-Directional-SAR-Modus oder im Forward/Backward-Looking-SAR-Modus durchgeführt wird.

Die verschiedenen Aspekte der Erfindung werden nachfolgend anhand der Zeichnung näher erläutert. Im Einzelnen zeigen dabei:

Fig. 1          eine grafische Darstellung des bekannten Staring Spotlight Modus mit den maximalen azimutalen Steuerwinkeln des TerraSAR-X Systems (TSX),

Fig. 2          eine grafische Darstellung des Converging PRF-Setting (links) und Diverging PRF-Setting (rechts),

Fig. 3          ein beispielhafter Ausschnitt aus einem Staring-Spotlight-Bild des TerraSAR-X Systems (TSX), wobei drei Flächenziele (A, B und C) und eine urbane Fläche (D) mit Bebauung markiert sind,

Fig. 4          eine schematische Darstellung des erfindungsgemäßen Staring Spotlight Modus mit erweitertem azimutalen Steuerwinkelbereich durch Ausnutzen der Hauptmaxima am Beispiel des TerraSAR-X Systems (TSX),

Fig. 5          eine Auswahl der gewünschten Signalanteile bzw. die Unterdrückung der unerwünschten Signalanteile, durch zeitabhängige Bandpass-Filterung und Diverging PRF-Setting, wobei die angegebenen Winkel beispielhaft für das TerraSAR-X System (TSX) sind,

Fig. 6          das prinzipielle Blockschaltbild der erfindungsgemäßen LNPC Multilook-Verarbeitung anhand des range komprimierten und Azimut phasenkorrigierten vollständigen Azimut-Spektrums,

| Fig. 7 | das prinzipielle Blockschaltbild der erfindungsgemäßen $\Omega$-Weighting-Multilook-Verarbeitung anhand des range komprimierten und Azimut phasenkorrigierten vollständigen Azimut-Spektrums, |
|---|---|
| Fig. 8 | eine grafische Darstellung des Steuerwinkels der linken TerraSAR-X Wrapped-Staring-Spotlight-Aufnahme gemäß Fig. 9, wobei in dünner Linie der kommandierte, sich wiederholende, also "gewrappte" Steuerwinkel, und in dicker Linie der "unwrappte" Steuerwinkel, also der durch Filterung und Diverging-PRF-Setting nutzbar gemachte und letztendlich prozessierte Steuerwinkel dargestellt ist, |
| Fig.9a und 9b | beispielhafte Wrapped-Staring-Spotlight-Bilder des TerraSAR-X Systems, wobei in Fig. 9a eine Szene mit urbanen Gebieten und Flächenzielen gezeigt und ein Ausschnitt für eine in der Figurenbeschreibung beschriebene Auswertung markiert ist und wobei in Fig. 9b eine Szene mit einem markierten Punktziel gezeigt ist, das in der Figurenbeschreibung genauer analysiert wird, |
| Fig. 10 | links die Azimutauflösung, gemessen für das in Fig. 9a ausgewählte Punktziel, wobei in gestrichelt die Messwerte für Element Pattern Weighting (EPW), als durchgezogene Linie die theoretischen/ simulierten Werte und gepunktet dazu im Vergleich die theoretischen/ simulierten Auflösungswerte für eine vollständige Korrektur des Antennendiagramms gezeigt sind und wobei rechts die gemessenen und simulierten Werte für das höchste Nebenzipfelverhältnis der Impulsantwort gezeigt sind, |
| Fign.11.1 und 11.2 | Azimut-Antennendiagramme und Spektren, und zwar in Fig. 11.1 für LNPC und Fig. 11.2 für $\Omega$-Weighting, wobei die unterschiedliche Skalierung der dargestellten Amplituden zu beachten ist und in den Diagrammen (a) das Profil des Azimutspektrums in durchgezogener und das gerechnete Antennendiagramm in gestrichelter Linie gezeigt ist, in den Diagrammen (b) die Azimut-Antennendiagramm-Korrektur spezifisch für jeden der neun Looks gezeigt ist, die abwechselnd in durchgezogener und in gestrichelter Linie gezeigt sind, in den Diagrammen (c) das Profil des Azimutspektrums nach der Antennendiagramm-Korrektur gezeigt ist und in den Diagrammen (d) das Profil des Azimutspektrums nach Korrektur des Antennendiagramms und Gewichtung zur Nebenzipfelunterdrückung gezeigt sind, |
| Fig. 12 | links ein optisches Google Earth Bild des Ausschnitts gemäß Fig. 9a und rechts das Amplitudenbild der SAR-Aufnahme bei klassischer Prozessierung von 9L$_{FPC}$, wobei die neun Looks hinsichtlich des AzimutAntennendiagramms vollständig korrigiert sind und wobei links und rechts verschiedene Flächenziele und Zielgebiete mit gemischtem Kontext durch weiße Rahmen markiert sind, |
| Fig. 13. | eine grafische Darstellung der optimierten $\Omega$-Gewichte für M=32 Klas-sen und ein SNR$_{ML,min}$ von 0 dB, wobei die X-Achse die Look-Nummer und die Y-Achse das SNR des zentralen Looks der Klassen zeigen, |
| Fig. 14 | ENL, SNR und radiometrische Auflösung für die optimierten Klassen des Ausführungsbeispiels, in dicker gestrichelter Linie für ein SNR$_{ML,min}$ von 0 dB und in dünner durchgezogener Line für 3 dB und |
| Fig. 15 | markierte Ausschnitte der in Fig. 9a gezeigten SAR-Akquisition, wobei 3L$_{FPC}$ für drei Looks mit voller Antennendiagramm-Korrektur - dies entspricht in guter Näherung dem operationell implementierten Staring-Spotlight-Modus des TerraSAR-X Systems - steht, 9L$_{LNPC}$ für neun Looks mit LNPC-Multilooking steht und 9L$_{\Omega,0dB}$, 9L$_{\Omega,3dB}$ für $\Omega$-Weighting-Multilooking in den Varianten 0 dB und 3 dB minimal gewünschtem SNR im Multilook-Bild stehen. |

Bei einem bestehenden SAR-System mit phasengesteuerter Gruppenantenne dehnt der erfindungsgemäße Aufnahmemodus (nachfolgend mit Wrapped-Staring-Spotlight-Modus bezeichnet) den Schwenkwinkelbereich gegenüber dem herkömmlichen Staring-Spotlight Aufnahmemodus wesentlich aus, und zwar ohne zusätzlichen On-board-Speicherplatz-Bedarf und ohne eine Verschlechterung der Quantisierung der Steuerwinkel. Vorbedingung ist, dass der Winkelabstand $\Delta\theta_{GL}$ zwischen den Hauptmaxima in ausreichender Quantisierung der Steuerwinkel abgedeckt ist. Die Ausdehnung erfolgt dann durch wiederholtes Einstellen der Steuerwinkel innerhalb $\Delta\theta_{GL}$, wobei aber nicht die Signalanteile der eigentlich durch die Anregungskoeffizienten eingestellten Steuerrichtung der synthetischen Apertur sondern diejenigen Signalanteile hinzugefügt werden, die aus der gewünschten Richtung eines anderen Hauptmaximums des Antennendiagramms kommen.

Fig. 4 zeigt erneut die Aufnahmegeometrie des beispielhaften TSX-Systems, allerdings für eine Wrapped-Staring-Spotlight-Aufnahme. Die mittleren drei Antennenpositionen sind bereits in Fig. 1 für den Staring-Spotlight-Modus gezeigt. Die beiden äußeren Antennenpositionen in Fig. 4 zeigen nun die Erweiterung des Schwenkwinkelbereichs. Um Signale aus den Richtungen $\pm\,4{,}4°$ aufzuzeichnen, werden an den beiden Positionen erneut die Anregungskoeffizienten für 0° Steuerwinkel eingestellt. Durch Diverging PRF Setting und entsprechende Filterung in der Prozessierung werden dann die gewünschten Steuerwinkel nutzbar gemacht. Für Punktziele bringt der erweiterte Steuerwinkelbereich direkt eine Verbesserung der geometrischen Auflösung.

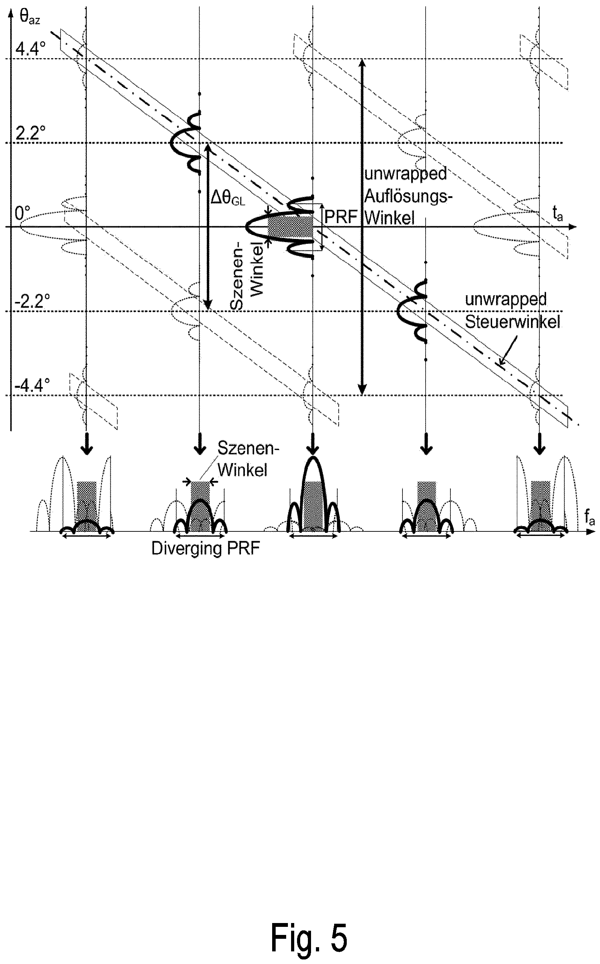

Die Auswahl der gewünschten Signalanteile bzw. die Unterdrückung der unerwünschten erfolgt durch eine zeitabhängige Bandpass-Filterung. Dieser Vorgang ist in Fig. 5 veranschaulicht. Während der Akquisition wird zu jedem Zeitpunkt der gewünschte Steuerwinkel direkt, oder durch Ausnutzen eines mehrdeutigen (engl.: "gewrappten") Hauptmaximums eingestellt. Dies ist in Fig. 5 durch die dicke in Strich-Punkten gezogene Linie gezeigt, die über der Azimutzeit $t_a$, d.h. der Aufnahmezeit, stetig von +4,4° Steuerwinkel zu -4,4° Steuerwinkel abfällt. Die vertikale Ausdehnung des um diese Linie in dünner durchgezogener Line gezeichneten Bandes um diesen Steuerwinkel ist der sogenannte Szenenwinkel, der die Ausdehnung der prozessierten Szene in Azimutrichtung angibt. Er wird entweder durch einen azimutzeitabhängigen Bandpassfilter in der Prozessierung eingestellt, oder äquivalent nach der Prozessierung durch Auswahl der Szenenausdehnung im fertig prozessierten Bild. Konkret kann der azimutzeitabhängige Filter zum Beispiel durch eine Subaperturverarbeitung mit unterschiedlichen Mittenfrequenzen in den Subaperturen realisiert werden [3]. Die Variation des gewünschten Steuerwinkels über der Azimutaufnahmezeit bestimmt die maximale geometrische Auflösung und wird als abgewickelter (engl.: unwrapped) Auflösungswinkel bezeichnet. Die im rechten oberen und im unteren linken Teil der Darstellung in gestrichelten Linien gezeigten Hauptmaxima sind von den gewünschten um den Winkel $\Delta\theta_{GL}$ verschoben. Die dargestellten Gain-Verhältnisse entsprechen qualitativ denen des beispielhaften TerraSAR-X Systems. Die untere Reihe von Diagrammen stellt die relative Positionierung der gewünschten und stärksten ungewünschten Hauptmaxima im PRF-Band für Diverging PRF-Setting dar. Für die Steuerwinkel von $\pm\,2{,}2°$ sind das gewünschte und das ungewünschte Hauptmaxima gleich groß, aber wegen des Diverging PRF-Setting voneinander separiert. Das ungewünschte Hauptmaxima kann durch den einem Bandpass entsprechenden Szenenwinkel unterdrückt werden. Für die im beispielhaften TerraSAR-X System sehr große Steuerung bis zu $\pm\,4{,}4°$ sind die Gain-Werte aus den gewünschten Steuerwinkel-Richtungen wesentlich geringer als die aus ungewünschten Richtungen. Sogar bei Anwendung von Diverging PRF-Setting ist der verbleibende Gain aus diesen Richtungen größer als derjenige aus den gewünschten Richtungen.

Die bei der Bildung der synthetischen Apertur unter Einbeziehung von Steuerwinkelbereichen mit schlechtem SNR entstehenden SAR-Bilder können bezüglich der beiden Qualitätsparameter "Kontrast" und "radiometrische Auflösung" gegenüber einer konventionellen SAR-Verarbeitung durch eine neuartige, vom SNR der einzelnen Looks abhängige, gewichtete Multi-Look-Prozessierung wesentlich verbessert werden. Zwei Hauptvarianten der neuartigen Multi-Look-Prozessierung werden nachfolgend als Ausführungsbeispiel angeführt, nämlich Look Normalisierte Antennendiagramm Korrektur (engl.: Look Normalized Pattern Correction - LNPC) mit einer über die Pixel konstanten und damit ortsunabhängigen Gewichtung der einzelnen Look-Bilder, und $\Omega$-Gewichtung (engl.: $\Omega$-Weighting) mit einer pixelabhängigen und damit ortsvarianten Gewichtung der Look-Bilder. LNPC ist einfacher zu implementieren. $\Omega$-Weighting ist flexibler und kann besser auf die Detektion von bestimmten Zielen abgestimmt werden.

LNPC gewichtet die einzelnen Azimut-Look-Bilder unterschiedlich stark in der Addition zum Multi-Look-Bild (engl.: Multilook Image). Die unterschiedliche Gewichtung ergibt sich durch eine normalisierte Korrektur des Azimut-Antennendiagramms. Die Normalisierung kann zum Beispiel in jedem Look auf die mittlere Azimutfrequenz des Looks bezogen werden, d.h. bei den mittleren Azimutfrequenzen der Looks wäre dann die Korrektur jeweils 1. Jedes Pixel im resultierenden Multi-Look-Bild besitzt genau gleich gewichtete Anteile der einzelnen Looks. LNPC ist damit ortsinvariant.

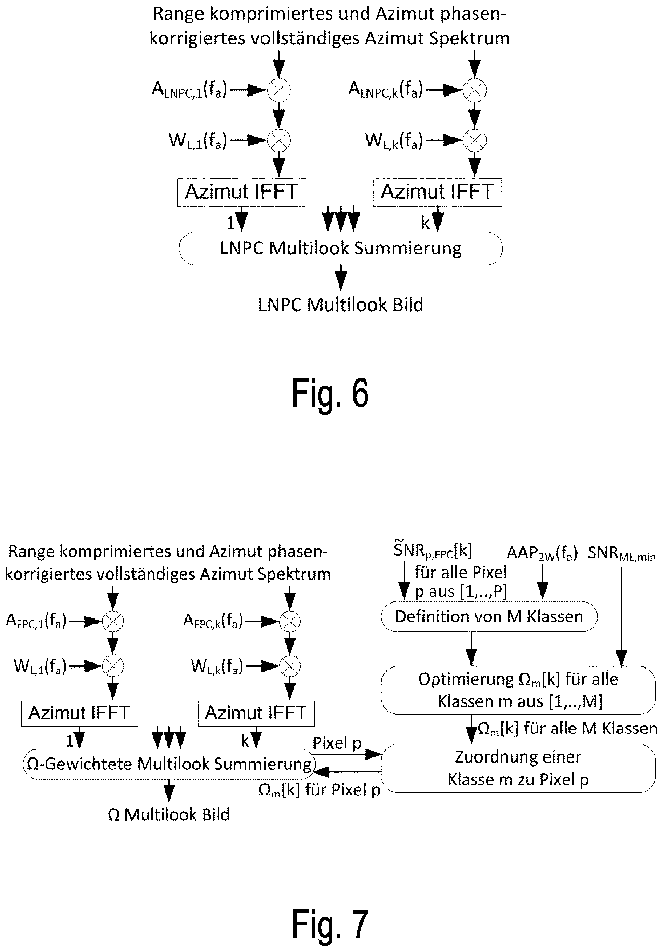

Fig. 6 zeigt das prinzipielle Blockschaltbild des LNPC-Multi-Looking. Der Ausgangspunkt ist das komplette Azimutspektrum, das in Entfernungsrichtung (engl.: Range) komprimiert und in Azimut vollständig phasenkorrigiert ist, einschließlich der Korrektur der Azimutmodulation.

Wichtig für das LNPC-Multi-Looking ist die spektrale Korrektur des Antennendiagramms durch die von der Azimutfrequenz $f_a$ und der Nummer des Looks abhängige Amplitudengewichtungsfunktion $A_{LNPC,k}(f_a)$ in Gleichung (3). Die Amplitude des Zweiweg-Azimut-Antennendiagramms des Gesamtspektrums ist mit $AAP_{2W}(f_a)$ bezeichnet. Die zentrale Dopplerfrequenz (engl.: Doppler centroid) des Looks k ist mit $f_{c,k}$ bezeichnet. Die Rechteckfunktion rect wählt für jeden Look k aus dem Gesamtsprektrum die Look-Bandbreite $B_L$ zentriert um $f_{c,k}$ aus. Das Antennendiagramm wird für alle Frequenzen $f_a$ korrigiert aber durch die Multiplikation mit $AAP_{2W}(f_{c,k})$ auf den Wert 1 bei der zentralen Dopplerfrequenz normiert.

$$A_{LNPC,k}(f_a) = \frac{AAP_{2W}(f_{c,k})}{AAP_{2W}(f_a)} \cdot \mathrm{rect}\left[\frac{f_a - f_{c,k}}{B_L}\right] \qquad (3)$$

An der gleichen Stelle im Ablauf von Fig. 6, an der die Multiplikation mit $A_{LNPC,k}(f_a)$ erfolgt, wird auch die gewünschte Gewichtung zur Nebenzipfelunterdrückung durch eine Multiplikation mit $M_{L,k}(f_a)$ durchgeführt. Diese Gewichtungsfunktion erstreckt sich über die Bandbreite $B_L$ und wird für jeden Look so verschoben, dass sie um $f_{c,k}$ zentriert ist. Nach der inversen Fast-FourierTransformation (IFFT) in Fig. 6 ergeben sich für jeden Bildpixel p jeweils k Look-Pixels mit den Intensitäten $I_{p,k}$. Diese werden dann gemäß der Vorschrift in Gleichung (4) zur Multi-Look-Pixel-Intensität $I_{p,ML}$ summiert.

$$I_{p,ML} = \frac{C_{cal}}{\sum\limits_{k=1}^{N_L}\left( W_{I,S}[k] \cdot \int\limits_{f_{c,k}-B_L/2}^{f_{c,k}+B_L/2} \left[ AAP_{2W}(f_a) \right]^2 df \right)} \cdot \sum\limits_{k=1}^{N_L} I_{p,k} \qquad (4)$$

$C_{cal}$ ist eine beliebige Kalibrierkonstante, zu der alle notwendigen, aber für die Beschreibung des Verfahrens nicht erforderlichen Konstanten zusammengefasst sind. Wegen der unterschiedlichen Gewichtung der Look-Pixel in der Summation zum Multi-Look-Pixel ist eine Normierung der Summe durch den Nenner in Gleichung (4) erforderlich. Dabei ist $W_{I,S}[k]$ ein in Gleichung (5) definierter Faktor für Look k, der das Verhältnis der Intensität eines Look-Pixels vor und nach der spektralen LNPC-Gewichtung und der Gewichtung zur Nebenzipfelunterdrückung beschreibt. Das Integral über die Look-Bandbreite $B_L$ ist um $f_{c,k}$ zentriert, und beinhaltet die Gewichtung der Intensität durch das Azimut-Antennendiagramm, das über der Bandbreite des Looks k auf diesen wirksam ist.

$$w_{I,S}[k] = \frac{\int\limits_{f_{c,k}-B_L/2}^{f_{c,k}+B_L/2} \left[ W_{L,k}(f_a) \cdot AAP_{2W}(f_{c,k}) \right]^2 df_a}{\int\limits_{f_{c,k}-B_L/2}^{f_{c,k}+B_L/2} \left[ AAP_{2W}(f_a) \right]^2 df_a} \qquad (5)$$

## Erfindungsgemäße $\Omega$-Weighting-Variante

Der Name $\Omega$-Weighting soll verdeutlichen, dass diese Gewichtung die letzte ist, die auf die einzelnen Looks angewendet wird, und zwar erst im Look-Bildbereich. Wie in Fig. 7 gezeigt, erfolgen die Korrektur des Antennendiagramms und die Gewichtung zur Nebenzipfel-Unterdrückung davor, noch im Azimut-Spektralbereich. Die Korrektur des Azimut-Antennendiagramms erfolgt, wie in Gleichung (6) gezeigt, vollständig durch Multiplikation der Amplitudenfunktion $A_{FPC,k}(f_a)$ auf das Amplitudenspekturm. Der Index FPC steht für vollständige Korrektur des Antennendiagramms (engl.: Full Pattern Correction).

$$A_{FPC,k}(f_a) = \frac{1}{AAP_{2W}(f_a)} \cdot rect\left[ \frac{f_a - f_{c,k}}{B_L} \right] \qquad (6)$$

Beim $\Omega$-Weighting erfolgt die Multi-Look-Summation der Intensitäten der einzelnen Look-Pixel $I_{p,k,FPC}$ wie in Gleichung (7) beschrieben unterschiedlich für jedes Pixel p über die Looks k. Die Bestimmung der einzelnen Gewichte $\Omega_{p,k}$ erfolgt abhängig vom SNR der einzelnen Look-Pixel und wird weiter unten beschrieben.

$$I_{p,ML,\Omega} = \frac{C_{cal}}{\sum\limits_{k=1}^{N_L}\left( \Omega_{p,k} \cdot W_{I,S,FPC}[k] \cdot \int\limits_{f_{c,k}-B_L/2}^{f_{c,k}+B_L/2} \left[ AAP_{2W}(f_a) \right]^2 df_a \right)} \cdot \sum\limits_{k=1}^{N_L} \left( \Omega_{p,k} \cdot I_{p,k,FPC} \right) \qquad (7)$$

$W_{I,S,FPC}[k]$ ist der in Gleichung (8) definierte Faktor für Look k, der das Verhältnis der Intensität eines Look-Pixels vor und nach der spektralen vollständigen Korrektur des Antennendiagramms und der Gewichtung zur Nebenzipfelunterdrückung beschreibt.

$$w_{I,S,FPC}[k] = \frac{\int\limits_{f_{c,k}-B_L/2}^{f_{c,k}+B_L/2} \left[ W_{L,k}\left(f_a\right) \right]^2 df_a}{\int\limits_{f_{c,k}-B_L/2}^{f_{c,k}+B_L/2} \left[ AAP_{2W}\left(f_a\right) \right]^2 df_a} \qquad (8)$$

**Bestimmung der Gewichte $\Omega_{p,k}$**

Die Zielsetzung bei der Optimierung der Gewichte ist es, ein Multi-Look-Bild unter Einbeziehung von Looks mit schlechtem SNR zu generieren,

i) dass gegenüber einer konventionellen SAR-Verarbeitung eine verbesserte radiometrische Auflösung zeigt und
ii) bei dem sich der Bildkontrast durch die Erhöhung des thermischen Rauschens nicht verschlechtert bzw. sogar verbessert.

Eine einfache Lösung wäre, das Gewicht $\Omega_{p,k}$ direkt vom gemessenen SNR des Pixels p im Look k, also direkt von $\tilde{SNR}_{p,FPC}[k]$ abzuleiten. Die Tilde zeigt einen Messwert an. Der Nachteil dabei ist, dass Look-Pixel mit großer gemessener Intensität immer stark gewichtet und Pixel niedriger Intensität immer schwach gewichtet werden, was die vom Speckle induzierten Intensitätsschwankungen verstärkt, also das Speckle erhöht. Diese Lösung scheidet daher aus.
Zur Einschränkung des Einflusses von Speckle auf die Gewichte wird beim $\Omega$-Weighting die Information aller Looks eines Bildpixels verwendet. Wie im prinzipiellen Blockschaltbild von Fig. 7 gezeigt, definiert das erfindungsgemäße Verfahren mit Hilfe des Antennendiagramms $AAP_{2W}(f_a)$ und den gemessenen SNR-Werten aller Pixel und Looks $\tilde{SNR}_{p,FPC}[k]$ Klassen von Pixel-SNR-Verläufen über den Looks. Dann werden die Gewichte $\Omega_m[k]$ für jede Klasse m so optimiert, dass für ein vorgegebenes minimal gefordertes SNR im Multi-Look-Bild $SNR_{ML,min}$ die radiometrische Auflösung möglichst klein wird. Falls $SNR_{ML,min}$ für eine Klasse nicht erreicht wird, werden alle Gewichte dieser Klasse zu Null gesetzt. Schließlich wird für jedes zu bildende Multi-Look-Bildpixel mit dem SNR-Verlauf der gemessenen Look-Pixel $\tilde{SNR}_{p,FPC}[k]$ die zugehörige Klasse m bestimmt und die Gewichtung $\Omega_m[k]$ dieser Klasse in der Multi-Look-Summation von Gleichung (7) verwendet, d.h. es wird $\Omega_{p,k}[k]$ zu $\Omega_m[k]$ gesetzt.
Für $\Omega$-Weighting ist das thermische Rauschen für Gebiete mit niedrigem Rückstreuquerschnitt (engl.: Backscatter) reduziert, d.h. genau in den Gebieten, in denen das thermische Rauschen am meisten stört. Für höheren Rückstreuquerschnitt ist mehr Rauschen toleriert, da damit die Anzahl der Looks und letztendlich die radiometrische Auflösung verbessert ist.
Ohne Verlust der Allgemeinheit wird jeweils eine Möglichkeit für die Definition der Klassen, für die Optimierung der Gewichte der Klassen und für die Zuordnung des SNR-Verlaufs eines Pixels über den Looks zu einer Klasse im Ausführungsbeispiel unten gezeigt.
Zusammenfassend lassen sich die erfindungswesentlichen Aspekte wie folgt beschreiben.
Der Wrapped-Staring-Spotlight-Aufnahmemodus dehnt bei einem bestehenden SAR-System mit phasengesteuerter Gruppenantenne sowie einem Abstand der durch Anregungskoeffizienten ansprechbaren Einzelantennen größer als die halbe Wellenlänge und On-board gespeicherten Anregungskoeffizienten zur Antennensteuerung in Azimut den Schwenkwinkelbereich gegenüber dem herkömmlichen Staring-Spotlight Aufnahmemodus wesentlich aus. Dies geschieht durch eine zusätzliche Ausnutzung von Hauptmaxima, welche sich neben dem Hauptmaximum in der eigentlich eingestellten Hauptmaximum-Richtung ausbilden, und zwar ohne zusätzlichen On-board-Speicherplatz-Bedarf und ohne eine Verschlechterung der Quantisierung der Steuerwinkel. Diverging PRF-Setting während der Daten-Akquisition unterstützt die Auswahl der gewünschten Signalanteile bzw. die Unterdrückung der unerwünschten Signal-Anteile, was durch eine zeitabhängige Bandpass-Filterung erfolgt. Der Mehrwert für Punktziele ist die mit der Ausdehnung des Schwenkwinkelbereichs einhergehende Verbesserung der geometrischen Auflösung. Der Mehrwert für Flächenziele und gemischte Bildinhalte ist eine verbesserte radiometrische Auflösung und ein verbesserter Kontrast in Multi-Look-Bildern.
Der Kern der Wrapped-Staring-Spotlight-Methode kann auch für andere SAR-Moden, wie zum Beispiel Bidirectional SAR oder Forward/Backward-Looking SAR eingesetzt werden, d.h. es können bei bestehenden SAR-Systemen Azimut-Blickrichtungen ausgewertet werden, die nicht im ursprünglich ausgelegten Bereich der Steuerwinkel liegen.
Die Variante der LNPC - Look Normalisierte Antennendiagramm-Korrektur (engl.: Look Normalized Pattern Correction) verbessert bei der Bildung der synthetischen Apertur unter Einbeziehung von Steuerwinkelbereichen mit schlechtem SNR die resultierenden Multi-Look-SAR-Bilder bezüglich der Qualitätsparameter "Kontrast" und "radiometrische Auflösung" gegenüber einer konventionellen, dem Stand der Technik entsprechenden SAR-Verarbeitung durch eine neuartige vom SNR der einzelnen Looks abhängige, gewichtete Multi-Look-Prozessierung. Bei LNPC erfolgt eine über die Pixelpositionen konstante und damit ortsunabhängige Gewichtung der einzelnen Look-Bilder.

LNPC kann auch für andere SAR-Moden mit ortsvariantem SNR in Azimutrichtung angewendet werden, wie zum Beispiel ScanSAR, TOPSAR, Staring Spotlight und Sliding Spotlight.

Die $\Omega$-Gewichtung (engl.: $\Omega$-Weighting) verbessert bei der Bildung der synthetischen Apertur unter Einbeziehung von Steuerwinkelbereichen mit schlechtem SNR die resultierenden Multi-Look-SAR-Bilder bezüglich der Qualitätsparameter "Kontrast" und "radiometrische Auflösung" gegenüber einer konventionellen dem Stand der Technik entsprechenden SAR-Verarbeitung durch eine neuartige vom SNR der einzelnen Looks abhängige gewichtete Multi-Look-Prozessierung. Bei der $\Omega$-*Gewichtung* erfolgt eine vom Ort der Pixel abhängige und damit ortsvariante Gewichtung der Look-Bilder.

Die $\Omega$-Gewichtung kann auch für andere SAR-Moden mit ortsvariantem SNR in Azimutrichtung angewendet werden, wie zum Beispiel ScanSAR, TOPSAR, Staring Spotlight und Sliding Spotlight.

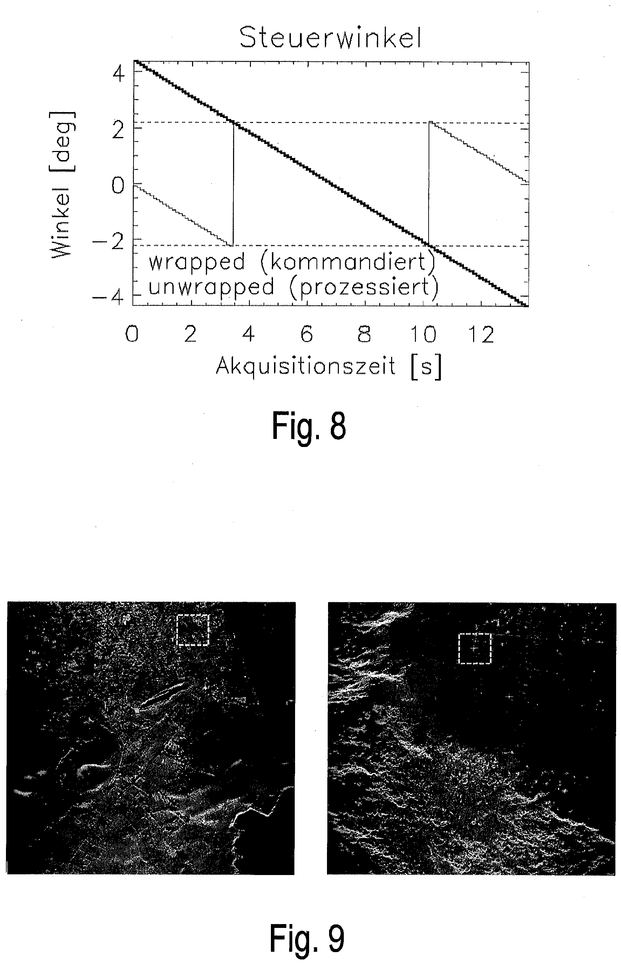

Wie oben beschrieben, wurden mit dem TerraSAR-X System zwei Akquisitionen im Wrapped-Starring-Spotlight-Aufnahmemodus durchgeführt. Die dabei über der Akquisitionszeit kommandierten Winkel für die links in Fig. 9 gezeigte Aufnahme sind in Fig. 8 in dünner Linie gezeigt. Dabei ist das wiederholte Einstellen der Steuerwinkels innerhalb $\Delta\theta_{GL}$ = 4,4° deutlich zu sehen. Der durch Ausnutzen der Gitterkeulen erzielte große Steuerwinkelbereich von 8,8° ist in dicker schwarzer Linie geplottet, welche im mittleren Bereich von ca. 3,5 s bis 10 s die dünne Linie überplottet.

Fign. 9a und 9b zeigen die beiden Wrapped-Starring-Spotlight Bilder in einer Überblicksdarstellung mit mehreren Looks. Die Azimutverarbeitung wurde mit dem vollen akquirierten Azimut-Steuerwinkelbereich von 8,8° durchgeführt. Teile aus den beiden Bildern werden im Folgenden näher betrachtet, um die Vorteile des Wrapped-Starring-Spotlight-Aufnahmeverfahrens sowie der LNPC-Multi-Look-Verarbeitung und der $\Omega$-Weighting-Multi-Look-Verarbeitung darzustellen.

Die Ausdehnung der Wrapped-Starring-Spotlight Bilder in den Fign. 9a und 9b entspricht in Azimutrichtung einem Szenen-Winkel in der Größe des Azimut-3dB-Öffnungswinkels der Antenne, d.h. der Projektion des Öffnungswinkels auf die Erdoberfläche in der Entfernung des Szenenzentrums. Der markierte Ausschnitt der Fig. 9a ist in Fig. 3 in einer Multi-Look-Darstellung gezeigt. Fig. 3 entspricht in etwa der Darstellung des dem Stand der Technik entsprechenden Staring-Spotlight-Abbildungsmodus des beispielhaften TSX-Systems. Der markierte Ausschnitt in Fig. 9b enthält einen dreiflächigen Reflektor (engl.: Corner Reflector), welcher im Bild als Punktziel erscheint. Beide in den Fign. 9a und 9b markierten Ausschnitte werden im Folgenden analysiert und damit wird der Nachweis der Vorteile der Erfindung geführt.

**Punktziele**

Die Impulsantwort auf das markierte Punktziel der Fig. 9b ist für wachsende prozessierte Bandbreite analysiert worden. Die Bandbreite des TerraSAR-X-Systems im Staring-Spotlight-Modus beträgt 38 kHz. Alle darüber hinausgehenden Bandbreiten sind durch Anwendung des Wrapped-Starring-Spotlight-Modus erzeugt worden. Die gemessene geometrische Azimutauflösung verbessert sich mit zunehmender prozessierter Bandbreite.

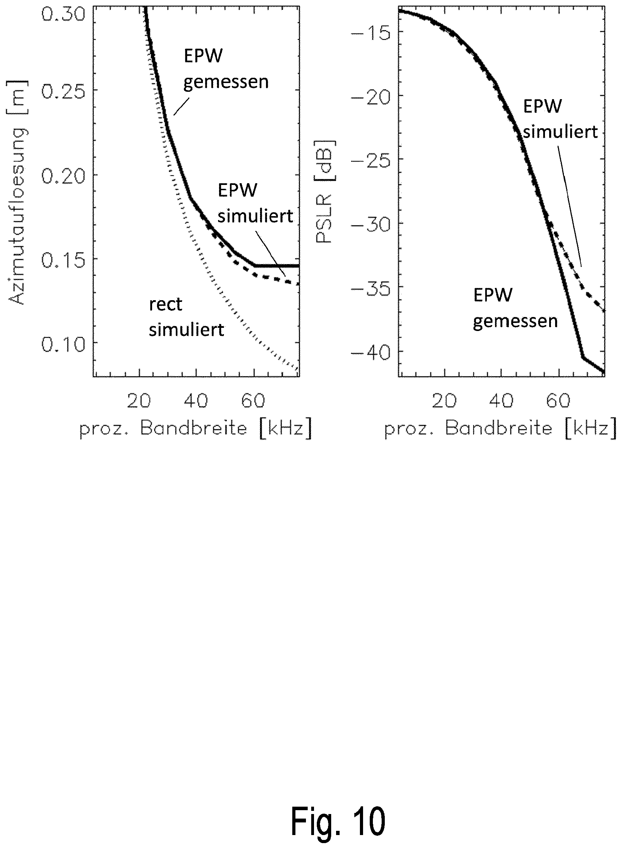

Die Prozessierung wurde ohne Korrektur des Antennendiagramms in Azimut durchgeführt. Dadurch bleibt die Gewichtung des Element-Antennendiagramms bei der Rohdatenaufzeichnung erhalten. Diese Gewichtung wird im Folgenden mit EPW (engl.: Element Pattern Weighting) bezeichnet. Mit zunehmender Bandbreite verändert sich diese Gewichtung von einer Ähnlichkeit zur Rechteckgewichtung hin zu einer Gewichtung mit starker Unterdrückung der Nebenzipfel. Dies zeigt sich in Fig. 10 im rechten Diagramm, welches das stärkste Nebenzipfelverhältnis (engl.: Peak-to-Side Lobe Ratio PSLR) der Punktzielantwort über der prozessierten Bandbreite zeigt. Die PSLR Werte einer idealen Simulation sind gestrichelt dargestellt. Die im TerraSAR-X-Wrapped-Starring-Spotlight-Bild für das Punktziel gemessenen Werte sind in durchgezogener Linie dargestellt. Das PSLR fällt ausgehend vom Wert für eine Rechteckgewichtung von -13,2 dB mit zunehmender Bandbreite ab, da sich die effektive Gewichtung hin zu einer stärkeren Nebenzipfelunterdrückung entwickelt. Die gemessenen Werte stimmen sehr gut mit der Simulation überein.

Die geometrische Auflösung links in Fig. 10 ist für die EPW-Gewichtung über der Bandbreite des operationell existierenden Staring-Spotlight-Modus des TerraSAR-X-Systems gemessen. Sie stimmt sehr gut mit den theoretischen/simulierten Werten überein. Ab 55 kHz ergibt sich eine kleine Abweichung; für die maximal prozessierte Bandbreite von 76 kHz beträgt sie 5%, die vermutlich auf die hohen Anforderungen an die Höheninformation des Standorts des Punktziels zurückzuführen ist. Dies ist aber eine Anforderung an das Verwendete Verfahren zur Fokussierung in Azimutrichtung. Die zunehmende Verbesserung der gemessenen geometrischen Auflösung zeigt aber die Verbesserung der geometrischen Auflösung gegenüber dem operationell existierenden Staring-Spotlight-Modus des TerraSAR-X-Systems, das bei 38 kHz maximaler Bandbreite und EPW eine Azimutauflösung von 0,19 m liefert. Die zusätzlich durch Wrapped-Staring-Spotlight erschlossenen Steuerwinkelbereiche können also für Punktziele erfolgreich in die synthetische Apertur integriert werden und verlängern diese dadurch bzw. erlauben eine verbesserte geometrische Auflösung in Azimut.

Zum Vergleich ist auch die simulierte geometrische Auflösung für eine Rechteck-Gewichtung (rect), also für eine vollständige Korrektur des Azimut-Antennendiagramms, angegeben.

**Flächenziele und gemischter Bildinhalt**

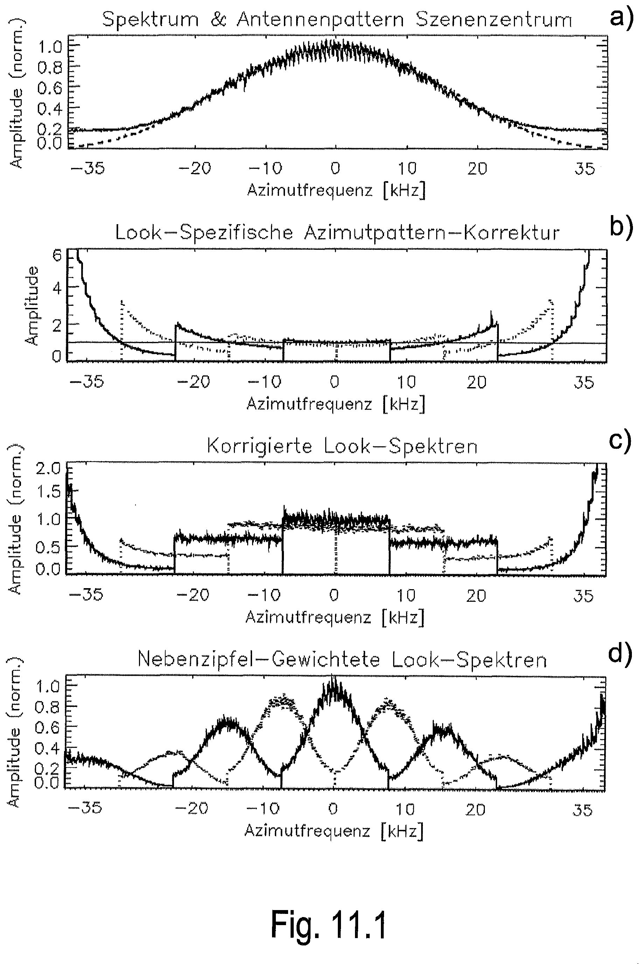

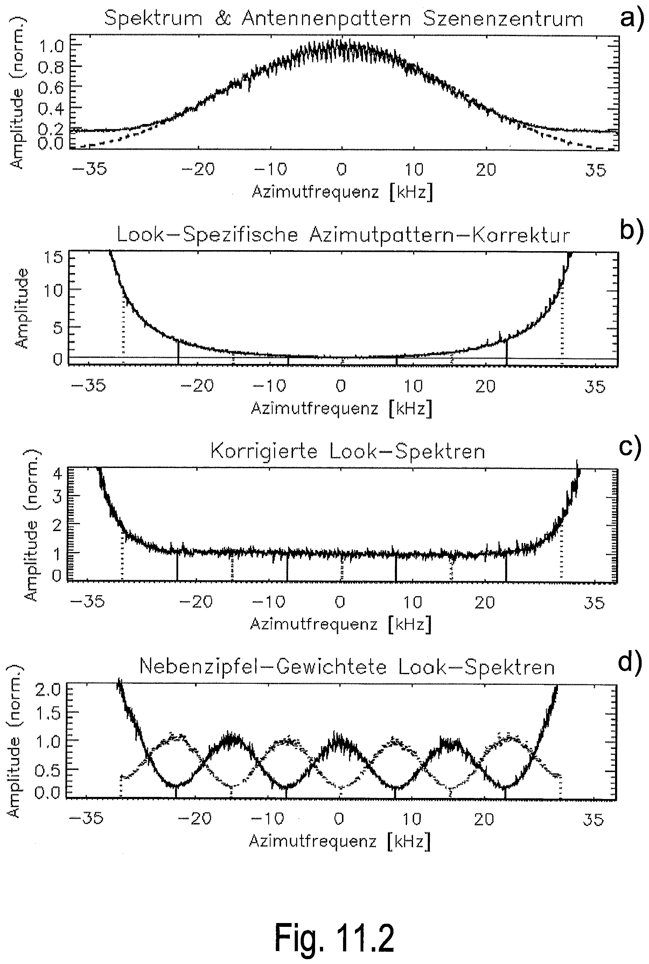

Um eine Verbesserung der Bildqualität für Flächenziele und für Bildteile mit gemischten Zielgebieten nachzuweisen, wurden über der ganzen Bandbreite der Wrapped-Staring-Spotlight-Aufnahme in Fig. 9a links eine Anzahl von neun Looks mit einer Bandbreite von je 15,2 kHz gebildet. Die Looks überlappen um 50% und jeder Look ist mit der oben beschriebenen Gewichtung zur Nebenzipfelunterdrückung gewichtet. Fign. 11.1 und 11.2 zeigen Profile des Azimut-spektrums für LNPC (siehe Fig. 11.1) und für $\Omega$-Weighting (siehe Fig. 11.2). Die oberen Diagramme (a) sind identisch und zeigen das Profil des Spektrums sowie das berechnete Antennendiagramm in gestrichelter Line. Sowohl Spektrum als auch Antennendiagramm zeigen Schwankungen auf Grund der Quantisierung der Antennensteuerung und der *Travelling Pulses* (d.h. teilweise unterschiedliche Sende- und Empfangs-Antennendiagramme wegen der langen Signallaufzeit > 1/PRF). Bei den äußeren, also den betragsmäßig größeren Azimutfrequenzen zeigt das im Vergleich zum Antennen-Diagramm (engl.: Pattern) höhere Profil des Spektrums einen stark erhöhten Rauschanteil in den real aufgenommenen Daten an. Das berechnete Antennen-Diagramm enthält keinen Rauschanteil.

Die Diagramme (b) der Fign. 11.1 und 11.2 zeigen die angewendeten Korrekturen des Antennendiagramms. Bei LNPC ist die Amplitude der Korrektur jeweils bei der zentralen Look-Frequenz gleich eins. Bei $\Omega$-Weighting erfolgt eine komplette Korrektur des Antennendiagramms (engl.: Full Pattern Correction FPC). Die Profile der korrigierten Azimutspektren zeigen an den Enden der äußeren Looks stark nach oben, was ein "Nach-Oben-Ziehen" des Rauschens bedeutet. Dieser Effekt ist beim $\Omega$-Weighting sehr viel stärker ausgeprägt. Man beachte die unterschiedliche Skalierung der Amplituden sowie die Begrenzung der dargestellten Amplitude. Die unteren Plots (d) zeigen die Spektren nach zusätzlicher Gewichtung zur Nebenzipfelunterdrückung.

Sowohl LNPC- als auch das $\Omega$-Weighting-Multilooking erzeugen eine gleiche Form der Impulsantworten auf ein Punktziel in allen Looks. D.h. die Signalspektren eines Punktziels sind gleich gewichtet. In den Fign. 11.1 und 11.2 sind die Gesamtspektren gezeigt, also Signal und Rauschen. Die Unterschiede in den Fign. 11.1 und 11.2 (d) entstehen auf Grund des unterschiedlich "hochgezogenen" Rauschanteils. Dies führt für Punktziele in jedem Look zu gleichen Performance-Werten der Punktzielantwort: geometrische Auflösung und Nebenzipfelverhältnisse.

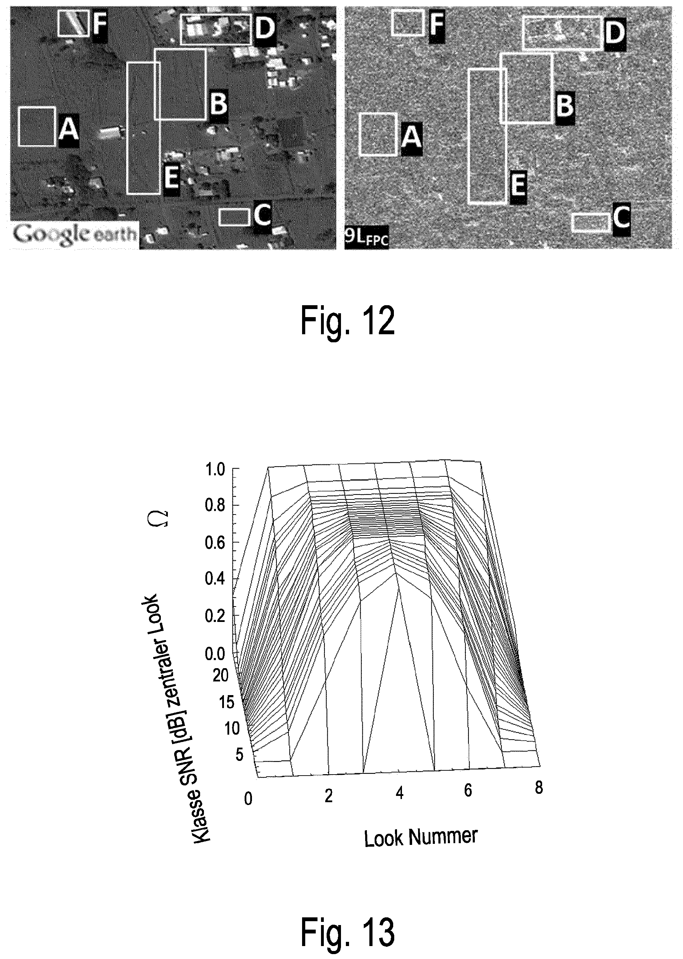

Fig. 12 zeigt links ein optisches Google Earth Bild des Ausschnitts in Fig. 9a Rechts in Fig. 12 ist das Ergebnis einer klassischen Azimutverarbeitung der neun Looks mit vollständiger Korrektur des Azimut-Antennendiagramms und Nebenzipfelunterdrückung zu sehen, im Folgenden mit $9L_{FPC}$ bezeichnet. Verschiedene Flächenziele und Zielgebiete mit gemischtem Kontext sind durch weiße Rahmen markiert.

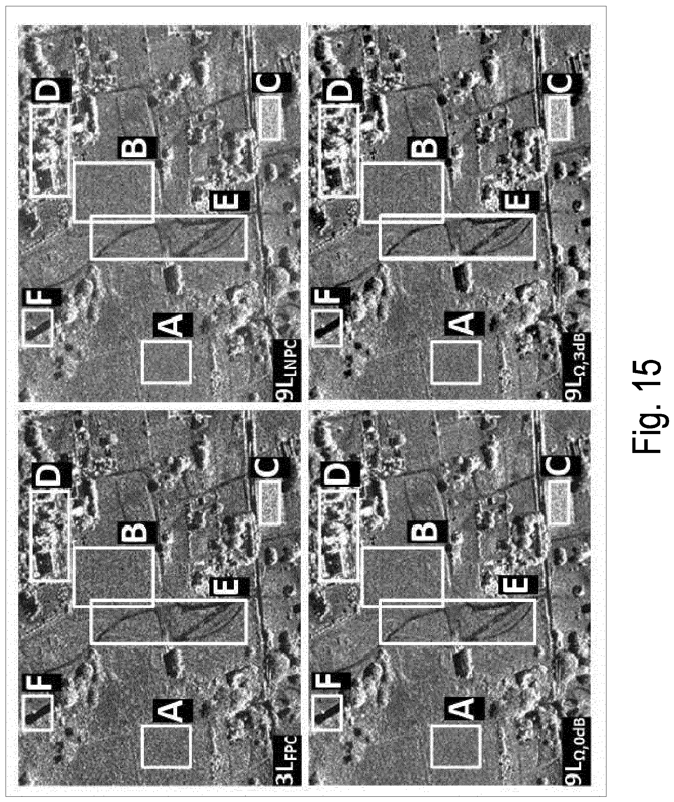

Aus Fig. 12 wird sofort klar, dass das SNR im Multilook-Bild bei klassischer Prozessierung $9L_{FPC}$ auf Grund des schlechten SNR der äußeren Looks völlig ungenügend für eine Bildauswertung ist. Fig. 15 zeigt die Ergebnisse für LNPC-Multilooking ($9L_{LNPC}$) und $\Omega$-Weighting-Multilooking in den Varianten 0dB minimales gewünschtes SNR im Multi-Look-Bild ($9L_{\Omega,0dB}$) und 3dB ($9L_{\Omega,3dB}$). Zum Vergleich ist auch die Variante mit drei Looks und voller Azimut-Antennendiagramm-Korrektur ($3L_{FPC}$) gezeigt, die in guter Näherung dem operationell implementierten Staring-Spotlight-Modus des TerraSAR-X Systems entspricht. Die Darstellung der Amplitude ist in allen gezeigten Amplitudenbildern in Fig. 15 so, wie oben beschrieben. Die Azimutauflösung beträgt in allen Looks und im Multi-Look-Bild 0,55m bei einer Abtastung von 0,26 m. In der Entfernungsdimension (hier Schrägsicht-Darstellung) beträgt die geometrische Auflösung 0,58 m bei einer Abtastung von 0,22 m.

Die Einstellung der einzelnen Gewichte des $\Omega$-Weightings erfolgte in diesem Ausführungsbeispiel wie folgt.

i) Das SNR wird in jedem Look für jeden Pixel gemessen. Um den Einfluss des Speckle zu verringern, wird dabei eine gleitende Mittelwertbildung unter Einbeziehung der acht benachbarten Pixel angewendet.

ii) Für den zentralen Look wird ein Histogramm erstellt und M Klassen werden so definiert, dass jede Klasse m in etwa gleich viele SNR-Werte enthält.

iii) Die SNR-Werte der anderen Looks werden ausgehend vom SNR-Wert des zentralen Looks mit Hilfe des Azimut-Antennendiagramms ergänzt.

iv) Die Optimierung wird für jede Klasse durchgeführt, so wie oben beschrieben. Es wird also für ein vorgegebenes gewünschtes minimales SNR eines Pixels des Multi-Look-Bildes $SNR_{ML,min}$ eine Optimierung der $\Omega$-Gewichte $\Omega_m[k]$ der einzelnen Looks k so durchgeführt, dass eine möglichst gute radiometrische Auflösung erzielt wird.

v) An jeder Pixelposition wird dem Verlauf der SNR-Werte (ohne gleitende Mittelwertbildung) über den einzelnen Looks eine Klasse zugeordnet. Dies erfolgt über den minimalen Gesamtabstand zwischen dem Verlauf der gemessenen SNR-Werte und der SNR-Werte der Klassen.

vi) Die für die Klasse optimierten $\Omega$-Gewichte werden in der Multi-Look-Summation für die jeweilige Pixelposition laut Gleichung (7) verwendet.

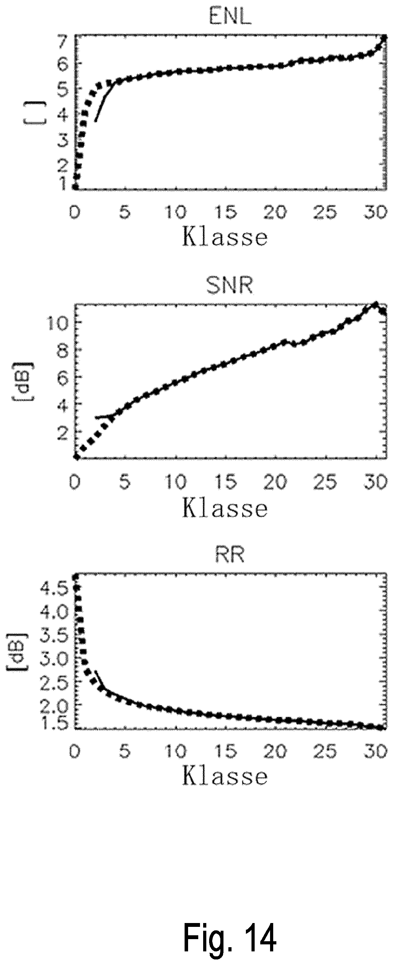

Fig. 13 zeigt die optimierten Gewichte für M=32 Klassen und ein minimal gewünschtes SNR von 0 dB in jedem Pixel des Mutli-Look-Bildes. Die Y-Achse zeigt nicht direkt die Nummer der Klasse, sondern das SNR des zentralen Looks der Klasse. Fig. 14 zeigt das Ergebnis der Optimierung der $\Omega$-Gewichte für die Klassen, und zwar die Equivalent Number of Looks (ENL), das SNR und die radiometrische Auflösung (RR).

**Vergleich der Bildergebnisse für das ganze Teilbild, Flächenziele und gemischten Bildinhalt**

Tabelle 2 fasst überblicksmäßig das für das jeweilige Multilook-Bild in Fig. 15 verwendete Multilook-Verfahren zusammen, gibt die für die Darstellung der Grauwerte verwendeten Amplitudengrenzwerte an und gibt Messwerte für verschiedene Bildbereiche an.

| | | | $3L_{FPC}$ | $9L_{LNPC}$ | $9L_{\Omega,0dB}$ | $9L_{\Omega,3dB}$ |
|---|---|---|---|---|---|---|
| Multi-Look | | # Looks | 3 | 9 | 9 | 9 |
| | | Pattern-Korrektur & SNR-Verbes. | FPC | LNPC | $\Omega$ | $\Omega$ |
| | | min. gewünschtes ML SNR | -- | -- | 0 dB | 3 dB |
| Grauwerte | | 0 für Amplitude | 0 | 0 | 0 | 0 |
| | | 255 für Amplitude | 11,76 | 11,62 | 11,69 | 11,87 |
| Kontrast $C_{rms}$ | | ganzes Teilbild | 56,5 | 48,3 | 53,1 | 57,1 |
| | | Zielgebiet D | 75,2 | 66,4 | 74,3 | 80,3 |
| | | Zielgebiet F | 60,6 | 51,5 | 61,5 | 70,4 |
| | | Zielgebiet E | 45,0 | 36,3 | 40,0 | 44,3 |
| Flächenziele | $C_{rms}$ | Zielgebiet B | 40,3 | 31,5 | 32,3 | 32,7 |
| | | Zielgebiet A | 40,3 | 31,2 | 31,8 | 32,0 |
| | | Zielgebiet C | 53,4 | 43,5 | 43,4 | 43,4 |
| | ENL | Zielgebiet B | 2,19 | 4,30 | 3,91 | 3,94 |
| | | Zielgebiet A | 2,25 | 4,50 | 4,16 | 4,17 |
| | | Zielgebiet C | 1,96 | 3,20 | 3,57 | 3,57 |
| | mittl. SNR [dB] | Zielgebiet B | 12,6 | 7,1 | 7,8 | 7,9 |
| | | Zielgebiet A | 12,7 | 7,2 | 7,9 | 7,9 |
| | | Zielgebiet C | 16,5 | 10,8 | 10,1 | 10,1 |
| | rad. Auflös. [dB] | Zielgebiet B | 2,34 | 1,98 | 2,01 | 2,00 |
| | | Zielgebiet A | 2,25 | 1,94 | 1,96 | 1,96 |
| | | Zielgebiet C | 2,38 | 2,05 | 1,99 | 1,99 |

Tabelle 2: Messwerte für die in Fig. 15 dargestellten Multi-Look-Bilder, die mit verschiedenen Multi-Look-Methoden generiert wurden. Die Werte für $3L_{FPC}$ wurden teilweise schon in Tabelle 1 angegeben.

**Ganze Teilbilder**

Das Bild $3L_{FPC}$ enthält wenig Rauschen da nur die inneren 3 Looks mit gutem SNR verwendet wurden, dafür aber ein hohes Speckle, was sich am ENL-Wert von ca. 2 für die Flächenziele zeigt. Obwohl für $9L_{LNPC}$ ein festes niedriges Gewicht für die äußeren Looks angewendet wird, ist das ENL zu einem Wert von 4 verbessert. Allerdings ist das Rauschen aufgrund der äußeren Looks erhöht, was im Bild durch den Grauschleier sichtbar ist, der beim Vergleich mit $3L_{FPC}$ zu erkennen ist. Ein weiterer Indikator für das erhöhte thermische Rauschen ist die Verminderung des Kontrasts von 56,5 auf 48,3. Die Verbesserung in Bezug auf Speckle zeigt sich an den verbesserten ENL-Werten. Der Bildkontrast ist verbessert auf 57,1 für $\Omega$-Weighting bei einem gewünschten minimalen Multi-look-SNR von $SNR_{ML,min}$ = 3dB.

**Flächenziele**

Die Verbesserung des ENL ist für die drei Flächenziele A, B, und C in Fig. 15 nachgemessen. Sie besitzen einen moderaten und hohen Radar-Rückstreuquerschnitt. Die Verbesserung im ENL ist am größten für $9L_{LNPC}$, da der Anstieg des Rauschens auch zur Verbesserung der ENL-Statistik beiträgt. Die Verbesserung für $9L_{\Omega,0dB}$ und $9L_{\Omega,3dB}$ bewegt sich aber in der gleichen Größenordnung. Für den hohen Radar-Rückstreuquerschnitt von Flächenziel C ist die Verbesserung bei den $\Omega$-Weighting-Bildern höher als bei $9L_{LNPC}$, da als Konsequenz des besseren SNR mehr Looks mit höherem Gewicht summiert wurden. Die höhere Gewichtung ist in Fig. 13 sichtbar. Das gemessene SNR ist am besten für $3L_{FPC}$ und niedriger für die anderen drei Bilder. Die radiometrische Auflösung aber, welche aus SNR und ENL hervorgeht, ist für die erfindungsgemäßen Methoden "LNPC und $\Omega$-Weighting" wesentlich verbessert. Der gemessene Bildkontrast in Tabelle 2 nimmt in den Flächenzielen für beide erfindungsgemäße Methoden durch die verbesserte radiometrische Auflösung wesentlich ab.

**Gemischter Bildinhalt**

Die Verbesserung in Speckle und Rauschen wird auch in der Szenerie von Flächenzielen und Fahrwegen des Zielgebiets E deutlich. In $3L_{FPC}$ ist die Detektierbarkeit der Wege eingeschränkt durch das hohe Speckle und in $9L_{LNPC}$ durch das hohe Rauschen. Die beste Detektierbarkeit für diese Szenerie wird mit $9L_{\Omega,3dB}$ erreicht, also mit $\Omega$-Weighting und einem hohen gewünschten SNR im Multi-Look-Bild. Das verminderte Speckle ist offensichtlich und der gemessene Kontrast ist ähnlich zu $3L_{FPC}$.

Künstliche Objekte wie Gebäude erzeugen starke Rückstreuung, z.B. an Kanten oder an Flächen die senkrecht zur Richtung des Radars stehen, und extrem niedrige Rückstreuung in abgeschatteten Gebieten. Dies führt zu einem hohen Bildkontrast. Hohes Rauschen bei niedriger Rückstreuung reduziert den Bildkontrast und so die Möglichkeiten zur Detektion und Klassifizierung für urbane Gebiete. Tabelle 2 gibt den gemessenen Kontrast für das Zielgebiet D mit Gebäuden und das Zielgebiet F in Fig. 15 an. Der Anstieg von Rauschen von $3L_{FPC}$ zu $9L_{LNPC}$ reduziert den Kontrast, da die Flächen mit niedrigem Radar-Rückstreuquerschnitt auf Grund des Rauschanstiegs heller erscheinen. $\Omega$-Weighting verbessert den Bildkontrast erheblich, und zwar durch die hohe Gewichtung der äußeren Looks für starke Ziele und die gleichzeitige niedrige Gewichtung der äußeren Looks für den schwachen Radar-Rückstreuquerschnitt von abgeschatteten Flächen. Zielgebiet F beinhaltet eine Dachstruktur. Die Bilder mit $\Omega$-Weighting zeigen reduziertes Speckle für das Flächenziel um die Dachstruktur. Die Verbesserung des SNR von $9L_{LNPC}$ über $9L_{\Omega,0dB}$ hin zu $9L_{\Omega,3dB}$ ist gut beobachtbar. Bei $9L_{\Omega,3dB}$ sind mehrere Pixel zu Null gesetzt, da das erwartete minimale Multi-Look SNR weniger als die gewünschten 3 dB beträgt.

Bestehende SAR-Systeme können durch den Wrapped-Staring-Spotlight-Modus im Schwenkwinkelbereich und damit in der geometrischen Auflösung in Azimut verbessert werden. Beispiele für aktuell im Betrieb befindliche Systeme sind das TerraSAR-X System, das kanadische Radarsat-System, das japanische ALOS 2/PalSAR 2-System oder das italienische Cosmo-Skymed-System. Das kurz vor dem Launch stehende spanische PAZ-System ist auch ein potentielles System, das durch Wrapped-Staring-Spotlight verbessert werden kann. Alle künftigen SAR-Systeme mit Phased Array-Antennen werden vom Wrapped-Staring-Spotlight-Modus profitieren. Auch flugzeuggetragene SAR-Systeme mit in Azimutrichtung steuerbarer, phasengesteuerter Gruppenantenne können durch den Wrapped-Staring-Spotlight-Modus nachträglich verbessert werden in Bezug auf geometrische und/oder radiometrische Auflösung. Der Kern der Wrapped-Staring-Spotlight-Methode kann auch für andere SAR-Moden, wie zum Beispiel Bi-directional SAR oder Forward/Backward-Looking SAR eingesetzt werden, d.h. es können bei bestehenden SAR-Systemen Azimut-Blickrichtungen ausgewertet werden, die nicht im ursprünglich ausgelegten Bereich der Steuerwinkel liegen. Auch der TOPSAR-Modus kann durch eine Ausdehnung des Schwenkwinkelbereichs erweitert werden. Ein Beispiel für ein solches System ist Sentinel-1.

Die Bildqualität kann bei SAR-Akquisitionen mit in Teilen der synthetischen Apertur schlechtem SNR wesentlich verbessert werden durch LNPC oder $\Omega$-Weighting. Beide Methoden können von Anfang an oder nachträglich in SAR-Prozessoren eingebaut werden und ermöglichen eine Verbesserung von Multi-Look-SAR-Bildern bezüglich der Qualitätsparameter Kontrast und radiometrische Auflösung. Beispiele sind wieder die beim Wrapped-Staring-Spotlight-Modus oben genannten SAR-Systeme.

**Literaturverzeichnis**

[1] J. Mittermayer, S. Wollstadt, P. Prats-Iraola, R. Scheiber: "The TerraSAR-X Staring Spotlight Mode Concept", IEEE Trans. on Geosc. Remote Sens., vol. 52, no. 6, pp. 3695-3706, June 2014.

[2] J. Mittermayer, S. Wollstadt, P. Prats, P. Lopez-Dekker, G. Krieger, A. Moreira: "Bidirectional SAR Imaging Mode", IEEE Trans. on Geosc. Remote Sens., vol. 51, no. 1, pp. 601-614, January, 2013.

[3] J. Mittermayer, A. Moreira and O. Loffeld, "Spotlight SAR Data Processing Using the Frequency Scaling Algorithm", IEEE Trans. on Geosc. Remote Sens., vol. 37, no. 5, pp. 2198-2214, September, 1999.

**Patentansprüche**

1. Verfahren zur Erstellung eines Erdbeobachtungsbildes einer Region mittels eines Radars mit synthetischer Apertur, SAR, und einer phasengesteuerten, aus Einzelantennen zusammengesetzten Gruppenantenne mit einem durch einen Steuerwinkel erzielbaren azimutalen Schwenkwinkelbereich, wobei jede Einzelantenne einen die Einzelantennenverstärkung in Abhängigkeit vom Raumwinkel beschreibenden Elementfaktor und die Gruppenantenne einen Arrayfaktor aufweist, der die sich aus der Anordnung und Anzahl der Einzelantennen ergebende Gruppenantennenverstärkung in Abhängigkeit vom Raumwinkel beschreibt, wobei die Gruppenantennenverstärkung mehrere Hauptmaxima aufweist, die im Wesentlichen gleich groß sind und die jedoch im Hinblick auf die Gesamtverstärkung, die sich aus dem Elementfaktor und der Gruppenantennenverstärkung ergibt, zu größer werdenden Steuerwinkeln hin abgeschwächt sind, wobei bei dem Verfahren

   - der nutzbare azimutale Schwenkwinkelbereich bei der Erfassung einer Region erweitert wird durch mehrmaliges Einstellen des gleichen Steuerwinkels innerhalb des eindeutigen, durch die geometrische Anordnung der Einzelantennen gegebenen Steuerwinkelbereichs und durch Herausfiltern desjenigen mehrdeutigen Hauptmaximums, das in die jeweils gewünschte Steuerrichtung zeigt, wodurch die geometrische und/oder radiometrische Auflösung des SAR verbessert wird, wobei die Pulswiederholfrequenz, mit der die Radarpulse gesendet werden, so gewählt wird, dass die jeweils gewünschten und die ungewünschten Hauptmaxima zur Reduzierung der ungewünschten Hauptmaxima separiert sind und somit ein Herausfiltern dieser Hauptmaxima möglich ist, und
   - mindestens eine Aufnahme der Region zur Erstellung eines Erdbeobachtungsbilds verarbeitet wird.

2. Verfahren nach Anspruch 1, **dadurch gekennzeichnet, dass** das Erdbeobachtungsbild anhand einer Multi-Look-Verarbeitung, d.h. anhand der Verarbeitung einer Gesamtaufnahme einer Region erstellt wird, die zusammengesetzt ist aus mehreren durch Beleuchten über jeweils unterschiedliche Blickwinkelbereiche hinweg erstellten Teilaufnahmen der Region, sogenannten Looks, wobei die Teilaufnahmen jeweils aus der Gesamtaufnahme herausgefiltert werden, wobei

   - Anteile der synthetischen Apertur, die bei bestimmten Blickwinkeln ein Signal-zu-Rausch-Verhältnis aufweisen, das kleiner ist als ein vorgebbarer Grenzwert, nutzbar gemacht werden durch eine Signal-zu-Rausch-abhängige Aufsummierung der einzelnen Looks, wobei die Aufsummierung entweder

      - ortsunabhängig direkt aus dem Azimut-Antennendiagramm abgeleitet wird durch eine normalisierte Korrektur des Antennendiagramms in den einzelnen Looks, wobei zunächst das Antennen-diagramm korrigiert und danach in jedem Look eine Normierung so durchgeführt wird, dass bei einem bestimmten Azimutwinkel oder, falls die Operation im Spektrum durchgeführt wird, bei einer bestimmten, für jeden Look spezifischen Azimutfrequenz das Produkt aus inversem Antennendiagramm und Normierung in jedem Look einen Wert von eins ergibt,
      oder
      - ortabhängig durch eine an jeder Pixelposition unterschiedliche Signal-zu-Rausch-abhängige Gewichtung der Looks durchgeführt wird, wobei die Gewichtungsfunktion für die ortsabhängige Gewichtung der Looks nach einem oder mehreren der nachfolgend genannten Optimierungskriterien erstellt wird:

         - eine möglichst gute radiometrische Auflösung und/oder
         - ein möglichst gutes Signal-zu-Rausch-Verhältnis im Multi-Look-Bild und/oder
         - eine möglichst hohe Anzahl Equivalent Number of Looks.

3. Verfahren nach Anspruch 1 oder 2, **dadurch gekennzeichnet, dass** die Aufnahme im Spotlight-Modus und damit durch Verlängerung der Beleuchtung der aufzunehmenden Region infolge der Erweiterung des azimutalen Schwenkwinkelbereichs, oder im TOPSAR-Modus durch Ausdehnung des azimutalen Schwenkwinkelbereichs, oder im Bi-Directional-SAR-Modus oder im Forward/Backward-Looking-SAR-Modus durchgeführt wird.

**Claims**

1. A method for producing an earth observation image of a region by means of a radar having a synthetic aperture (SAR) and a phase-controlled array antenna which is composed of individual antennas and has an azimuth pivot angle range that can be adjusted by a steering angle, wherein each individual antenna has an element factor describing the individual antenna gain as a function of the spatial angle, and the array antenna has an array factor which describes the array antenna gain resulting from the arrangement and the number of individual antennas as a function of the spatial angle, wherein the array antenna gain has a plurality of main maxima which are substantially equally large, but which are, with regard to the total gain resulting from the element factor and the array antenna gain, attenuated towards increasing steering angles, wherein in the method

   - the usable azimuthal pivot angle range, during detection of a region, is widened by repeatedly adjusting the same steering angle within the unwrapped steering angle range defined by the geometric arrangement of the individual antennas and by filtering out the one wrapped main maximum which points in the respective desired steering direction, whereby the geometric and/or radiometric resolution of the SAR is improved, wherein the pulse repetition frequency, at which the radar pulses are sent, is selected such that the respective desired and undesired main maxima are separated for reducing the undesired main maxima and thus a filtering-out of these main maxima is possible, and
   - at least one acquisition of the region is processed for producing an earth observation image.

2. The method according to claim 1, **characterized in that** the earth observation image is produced on the basis of a multilook processing, i.e. on the basis of the processing of an overall acquisition of a region which is composed of a plurality of partial acquisitions so-called looks of the region produced by illumination across respective different viewing angle ranges, wherein the partial acquisitions are respectively filtered out of the overall acquisition, wherein

   - portions of the synthetic aperture having, at particular viewing angles, a signal-to-noise ratio which is smaller than a predeterminable limit value, are made usable by a signal-to-noise-dependent summation of the individual looks, wherein the summation either

      - is derived, independent of the location, directly from the azimuth antenna pattern by a normalized correction of the antenna pattern in the individual looks, wherein, first, the antenna pattern is corrected and then a normalization is carried out in each look such that at a particular azimuth angle or, if the operation is carried out in the spectrum, at a particular azimuth frequency specific to each look the product of inverse antenna pattern and normalization in each look results in a value of one,
      or
      - is carried out in a location-dependent manner by a signal-to-noise-dependent weighting of the looks which is different at each pixel position, wherein the weighting function for the location-dependent weighting of the looks is produced according to one or several of the following optimization criteria:

         - as good a radiometric resolution as possible, and/or
         - as good a signal-to-noise ratio as possible in the multilook image, and/or
         - as high a number of equivalent number of looks as possible.

3. The method according to claim 1 or 2, **characterized in that** the acquisition is carried out in the spotlight mode and thus by extending the illumination of the region to be acquired due to the widening of the azimuthal pivot angle range, or in the TOPSAR mode by widening the azimuthal pivot angle range, or in the bidirectional SAR mode or in the forward/backward looking SAR mode.

**Revendications**

1. Procédé de production d'une image d'observation terrestre d'une région au moyen d'un radar à synthèse d'ouverture, RSO, et d'une antenne-réseau à commande de phase constituée d'antennes individuelles assemblées avec une plage d'angle de pivot azimutal réalisable par un angle de commande, dans lequel chaque antenne individuelle comporte un facteur élémentaire décrivant le gain d'antenne individuel en fonction de l'angle spatial et l'antenne-réseau comporte un facteur de réseau décrivant le gain d'antenne-réseau obtenu à partir de l'agencement et du nombre des antennes individuelles en fonction de l'angle de commande, dans lequel le gain d'antenne-réseau comporte plusieurs maxima principaux, lesquels sont de valeur sensiblement égale mais sont atténués vers des angles de commande croissants par rapport au gain total résultant du facteur d'élément et du gain d'antenne-réseau, dans lequel, lors du procédé

- la plage d'angle de pivot azimutal utilisable pour la saisie d'une région est étendue en réglant plusieurs fois le même angle de commande à l'intérieur de la plage d'angle de commande univoque donnée par l'agencement géométrique des antennes individuelles et par filtrage du maximum principal ambigu qui pointe dans la direction de commande désirée respective, grâce à quoi la résolution géométrique et/ou radiométrique du RSO, dans lequel la fréquence de répétition des impulsions, avec laquelle les impulsions radar sont émises, est choisie de manière à ce que les maxima principaux désirés et indésirables soient séparés afin de réduire les maxima principaux indésirables et qu'un filtrage de ces maxima principaux soit ainsi possible, et
- au moins une capture de la région est traitée afin de produire une image d'observation terrestre.

**2.** Procédé selon la revendication 1, **caractérisé en ce que** l'image d'observation terrestre est produite à l'aide d'un traitement multivisée, c'est-à-dire à l'aide du traitement d'une capture totale d'une région, composée de plusieurs captures partielles de la région, appelées visées, produites par une illumination sur des plages d'angles de vue respectivement différentes, dans lequel les captures partielles sont respectivement filtrées de la capture totale, dans lequel

- les parties de l'ouverture synthétique qui, sous des angles de vue déterminés, présentent un rapport signal/bruit inférieur à une valeur limite pouvant être prédéfinie, sont rendues utilisables par une sommation des visées individuelles en fonction du rapport signal/bruit, dans lequel la sommation est ou bien

- dérivée directement du diagramme d'antenne azimutal, indépendamment de l'emplacement, par une correction normalisée du diagramme d'antenne dans les visées individuelles, le diagramme d'antenne étant d'abord corrigé et ensuite, dans chaque visée, une normalisation est effectuée de telle sorte que, pour un angle d'azimut déterminé ou, si l'opération est effectuée dans le spectre, pour une certaine fréquence d'azimut spécifique à chaque visée, le produit du diagramme d'antenne inverse et de la normalisation dans chaque visée donne une valeur de un,
ou
- effectuée en fonction de l'emplacement par une pondération des visées en fonction du rapport signal/bruit, laquelle diffère à chaque position de pixel, dans laquelle la fonction de pondération pour la pondération des visées en fonction de l'emplacement est produite selon un ou plusieurs des critères d'optimisation suivants :

- une résolution radiométrique la meilleure possible et/ou
- un rapport signal/bruit le meilleur possible dans l'image multivisée et/ou
- un nombre équivalent de visées le plus haut possible.

**3.** Procédé selon la revendication 1 ou 2, **caractérisé en ce que** la capture est effectuée en mode projecteur et donc par prolongation de l'illumination de la région à capturer suite à l'élargissement de la plage d'angle de pivot azimutale, ou en mode TOPSAR en étendant la plage d'angle de pivot azimutale, ou en mode RSO bidirectionnel ou en mode RSO à visée avant/arrière.

Fig. 1

Fig. 2

Fig. 3

Fig. 4

Fig. 5

Range komprimiertes und Azimut phasenkorrigiertes vollständiges Azimut Spektrum

$A_{LNPC,1}(f_a)$ —→ ⊗

$W_{L,1}(f_a)$ —→ ⊗

$A_{LNPC,k}(f_a)$ —→ ⊗

$W_{L,k}(f_a)$ —→ ⊗

Azimut IFFT

Azimut IFFT

1

k

LNPC Multilook Summierung

LNPC Multilook Bild

## Fig. 6

Range komprimiertes und Azimut phasenkorrigiertes vollständiges Azimut Spektrum

$\widetilde{SNR}_{p,FPC}[k]$    $AAP_{2W}(f_a)$   $SNR_{ML,min}$
für alle Pixel
p aus [1,..,P]

$A_{FPC,1}(f_a)$ —→ ⊗

$W_{L,1}(f_a)$ —→ ⊗

$A_{FPC,k}(f_a)$ —→ ⊗

$W_{L,k}(f_a)$ —→ ⊗

Azimut IFFT

Azimut IFFT

1

k

Pixel p

Definition von M Klassen

Optimierung $\Omega_m[k]$ für alle
Klassen m aus [1,..,M]

$\Omega_m[k]$ für alle M Klassen

Ω-Gewichtete Multilook Summierung

$\Omega_m[k]$ für Pixel p

Zuordnung einer
Klasse m zu Pixel p

Ω Multilook Bild

## Fig. 7

Fig. 8

Fig. 9

Fig. 10

a) Spektrum & Antennenpattern Szenenzentrum

b) Look—Spezifische Azimutpattern—Korrektur

c) Korrigierte Look—Spektren

d) Nebenzipfel—Gewichtete Look—Spektren

Fig. 11.1

Fig. 11.2

Fig. 12

Fig. 13

Fig. 14

Fig. 15

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **J. MITTERMAYER ; S. WOLLSTADT ; P. PRATS-IRAOLA ; R. SCHEIBER.** The TerraSAR-X Staring Spotlight Mode Concept. *IEEE Trans. on Geosc. Remote Sens.,* Juni 2014, vol. 52 (6), 3695-3706
- **J. MITTERMAYER ; S. WOLLSTADT ; P. PRATS ; P. LOPEZ-DEKKER ; G. KRIEGER ; A. MOREIRA.** Bidirectional SAR Imaging Mode. *IEEE Trans. on Geosc. Remote Sens.,* Januar 2013, vol. 51 (1), 601-614

- **J. MITTERMAYER ; A. MOREIRA ; O. LOFFELD.** Spotlight SAR Data Processing Using the Frequency Scaling Algorithm. *IEEE Trans. on Geosc. Remote Sens.,* September 1999, vol. 37 (5), 2198-2214